# EUROPEAN PATENT APPLICATION

(11) **EP 4 667 260 A1**
(43) Date of publication of application: **24.12.2025**
(21) Application number: 25182957.8
(22) Date of filing: 16.06.2025
(51) Int. Cl.: B60K 6/445, B60K 6/448, B60K 6/52, B60W 10/06, B60W 10/08, B60W 20/10

(54) **DRIVE APPARATUS FOR VEHICLE**

(30) Priority: 17.06.2024 JP 2024097760
(71) Applicant: TOYOTA JIDOSHA KABUSHIKI KAISHA, Toyota-shi, Aichi-ken 471-8571 (JP)
(72) Inventor: IMAMURA, Tatsuya, Toyota-shi, 471-8571 (JP); YOSHINO, Hirotsugu, Toyota-shi, 471-8571 (JP); SUZUKI, Yosuke, Toyota-shi, 471-8571 (JP); KURIHARA, Daiki, Toyota-shi, 471-8571 (JP)
(74) Representative: D Young & Co LLP

(57) **Abstract**

A drive apparatus (10;310;410;510) for a vehicle (8;300;400;500). In the drive apparatus (10;310;410;510), a first HEV mode and an all-wheel drive mode can be established. In the first HEV mode, the vehicle (8;300;400;500) is caused to run in front-wheel drive or rear-wheel drive, by causing a first electric motor (MG1) to be operated as an electric generator by operating an engine (20), while causing a third electric motor (MG3) to be operated as a prime mover to transmit a torque to a second drive shaft (58). In the all-wheel drive mode, the vehicle (8;300;400;500) is caused to run in all-wheel drive, by causing an electric power to be transferred between the first electric motor (MG1) and the second electric motor (MG2) by operating the engine (20), while causing the third electric motor (MG3) to be operated as the prime mover to transmit the torque to the first drive shaft (38) and the second drive shaft (58), and the first, second and third electric motors (MG1, MG2, MG3) are controlled such that a torque distribution between the first drive shaft (38) and the second drive shaft (58) becomes a required ratio.

## Description

### FIELD OF THE INVENTION

The present invention relates to a drive apparatus for a vehicle, wherein the drive apparatus includes an engine, three electric motors, a differential mechanism, drive shafts for driving front and rear wheels of the vehicle, and a control apparatus.

### BACKGROUND OF THE INVENTION

There is well known a drive apparatus for a vehicle, which includes: an engine; a first electric motor; a second electric motor; a third electric motor; a differential mechanism; a first drive shaft for driving one of front and rear wheels of the vehicle; a second drive shaft for driving the other of the front and rear wheels; and a control apparatus. For example, U.S. Patent No. 8,512,189 discloses such a drive apparatus. In the drive apparatus disclosed in this U.S. Patent Publication, the differential mechanism includes four rotary elements consisting of a first rotary element, a second rotary element, a third rotary element and a fourth rotary element. Further, in the disclosed drive apparatus, the engine is connected to the first rotary element, the first electric motor is connected to the second rotary element, the second electric motor is connected to the third rotary element, and the first drive shaft is connected to the fourth rotary element. In addition, in the disclosed drive apparatus, the third electric motor is connected to the second drive shaft. Moreover, in the disclosed drive apparatus, there are a compound split mode, an input split mode and an wheel drive mode that can be established as a drive mode of the vehicle in a state in which the engine is operated.

### SUMMARY OF THE INVENTION

By the way, in the drive apparatus disclosed in the above-identified U.S. Patent Publication, when the vehicle is caused to run with the engine being operated, the first electric motor or second electric motor is operated to generate a reaction torque acting against a torque of the engine, so that torque vibration of the engine could be transmitted to the first drive shaft. Thus, when the vehicle is caused to run with the engine being operated, there is a risk that a body of the vehicle could be vibrated. Therefore, it is desirable to enable the vehicle to run in the all-wheel drive while preventing the torque vibration of the engine from being transmitted to the first drive shaft.

The present invention was made in view of the background art described above. It is therefore an object of the present invention to provide a drive apparatus for a vehicle, wherein the drive apparatus is capable, when the vehicle is caused to run with an engine being operated, of reducing vibration of a body of the vehicle while assuring performance of the vehicle in all-wheel drive.

The object indicated above is achieved according to the following aspects of the present invention.

According to a first aspect of the invention, there is provided a drive apparatus for a vehicle. The drive apparatus includes: (a) an engine; (b) a first electric motor; (c) a second electric motor; (d) a third electric motor; (e) a differential mechanism; (f) a first drive shaft for driving one of front and rear wheels of the vehicle; (g) a second drive shaft for driving the other of the front and rear wheels; and (h) a control apparatus including a processor. The differential mechanism includes a first rotary element, a second rotary element and a third rotary element. The engine and the first electric motor are connected to the first rotary element, the second electric motor is connected to the second rotary element, and the first drive shaft is connected to the third rotary element. The third electric motor is connected to the second drive shaft. The processor is configured to establish, as a drive mode of the vehicle, at least a first HEV mode and an all-wheel drive mode. When establishing the first HEV mode, the processor is configured to cause the vehicle to run in one of front-wheel drive and rear-wheel drive, by causing the first electric motor to be operated as an electric generator by operating the engine, while causing the third electric motor to be operated as a prime mover so as to transmit a torque to the second drive shaft. When establishing the all-wheel drive mode, the processor is configured to cause the vehicle to run in all-wheel drive, by causing an electric power to be transferred between the first electric motor and the second electric motor by operating the engine, while causing the third electric motor to be operated as the prime mover so as to transmit the torque to the first drive shaft and the second drive shaft, and is configured to control the first, second and third electric motors such that a torque distribution between the first drive shaft and the second drive shaft becomes a required ratio.

According to a second aspect of the invention, in the drive apparatus according to the first aspect of the invention, when establishing the all-wheel drive mode, the processor is configured to control the first, second and third electric motors such that an electric power balance in the first, second and third electric motors falls within a predetermined range.

According to a third aspect of the invention, in the drive apparatus according to the first or second aspect of the invention, the processor is configured to establish, as the drive mode of the vehicle, a second HEV mode in addition to the first HEV mode and the all-wheel drive mode. When establishing the second HEV mode, the processor is configured to cause the vehicle to run in the all-wheel drive, by causing the second electric motor to be operated as the electric generator by operating the engine, while causing the third electric motor to be operated as the prime mover so as to transmit the torque to the first drive shaft and the second drive shaft.

According to a fourth aspect of the invention, in the drive apparatus according to the first or second aspect of the invention, the processor is configured to establish, as the drive mode of the vehicle, a third HEV mode in addition to the first HEV mode and the all-wheel drive mode. When establishing the third HEV mode, the processor is configured to cause the vehicle to run in the other of the front-wheel drive and the rear-wheel drive, by causing the first electric motor to be operated as the electric generator by operating the engine, while causing the second electric motor to be operated as the prime mover so as to transmit the torque to the first drive shaft.

According to a fifth aspect of the invention, in the drive apparatus according to the first or second aspect of the invention, the processor is configured to establish the first HEV mode, when a running speed of the vehicle is lower than a predetermined speed value and a driving load of the vehicle is lower than a predetermined load value.

According to a sixth aspect of the invention, in the drive apparatus according to the third aspect of the invention, the processor is configured to establish the second HEV mode, when a driving load of the vehicle is not lower than a predetermined load value.

According to a seventh aspect of the invention, in the drive apparatus according to the fourth aspect of the invention, the processor is configured to establish the third HEV mode, when a running speed of the vehicle is not lower than a predetermined speed value.

According to an eighth aspect of the invention, in the drive apparatus according to the third aspect of the invention, the processor is configured to establish, as the drive mode of the vehicle, a third HEV mode in addition to the first HEV mode, the second HEV mode and the all-wheel drive mode. When establishing the third HEV mode, the processor is configured to cause the vehicle to run in the other of the front-wheel drive and the rear-wheel drive, by causing the first electric motor to be operated as the electric generator by operating the engine, while causing the second electric motor to be operated as the prime mover so as to transmit the torque to the first drive shaft.

According to a ninth aspect of the invention, in the drive apparatus according to the eighth aspect of the invention, the processor is configured, in absence of the required ratio of the torque distribution between the first drive shaft and the second drive shaft, to determine the drive mode to be established, based on a running speed of the vehicle and a driving load of the vehicle, and the processor is configured to establish the all-wheel drive mode as the drive mode, in presence of the required ratio of the torque distribution.

According to a tenth aspect of the invention, in the drive apparatus according to the ninth aspect of the invention, the processor is configured, in absence of the required ratio of the torque distribution, to establish the first HEV mode as the drive mode when the running speed is lower than a predetermined speed value and the driving load is lower than a predetermined load value, to establish the second HEV mode as the drive mode when the driving load is not lower than the predetermined load value, and to establish the third HEV mode as the drive mode when the running speed is not lower than the predetermined speed value.

In the drive apparatus according to the first aspect of the invention, the engine and the first electric motor are connected to the first rotary element of the differential mechanism, the second electric motor is connected to the second rotary element of the differential mechanism, and the first drive shaft provided for driving one of the front and rear wheels is connected to the third rotary element of the differential mechanism. The third electric motor is connected to the second drive shaft provided for driving the other of the front and rear wheels. As the drive mode of the vehicle, at least the first HEV mode and the all-wheel drive mode are established by controlling the engine, first electric motor, second electric motor and third electric motor. In the all-wheel drive mode, the first, second and third electric motors are controlled such that the torque distribution between the first drive shaft and the second drive shaft becomes the required ratio. Thus, when the vehicle is caused to run with the engine being operated, a so-called series driving can be performed with the first HEV mode being established as the drive mode. In the series driving, the vehicle can be caused to run in one of the front-wheel drive and the rear-wheel drive, by transmitting the torque to the second drive shaft, so that it is possible to prevent torque vibration of the engine being transmitted to the first drive shaft. Further, when the vehicle is caused to run with the engine being operated, the vehicle can be caused to run in the all-wheel drive by establishing the all-wheel drive mode as the drive mode. In the all-wheel drive mode, the torque is transmitted to the first drive shaft and the second drive shaft in accordance with the required ratio of the torque distribution between the first drive shaft and the second drive shaft. Thus, when the vehicle is caused to run with the engine being operated, it is possible to reduce vibration of a body of the vehicle while assuring performance of the vehicle in the all-wheel drive.

In the drive apparatus according to the second aspect of the invention, when the all-wheel drive mode is established, the first, second and third electric motors are controlled such that the electric power balance in the first, second and third electric motors falls within the predetermined range. Thus, irrespective of a charged amount of a battery configured to supply and receive an electric power to and from each of the first, second and third electric motors, it is possible to control the first, second and third electric motors such that the torque distribution between the first drive shaft and the second drive shaft becomes the required ratio.

In the drive apparatus according to the third aspect of the invention, the second HEV mode can be established as the drive mode in addition to the first HEV mode and the all-wheel drive mode. Thus, when the vehicle is caused to run with the engine being operated, the second HEV mode is established as the drive mode, for improving energy efficiency, while transmitting the torque to the first drive shaft and the second drive shaft, thereby allowing the vehicle to run in the all-wheel drive.

In the drive apparatus according to the fourth aspect of the invention, the third HEV mode can be established as the drive mode in addition to the first HEV mode and the all-wheel drive mode. Thus, when the vehicle is caused to run with the engine being operated, the third HEV mode is established as the drive mode, for transmitting the torque to the first drive shaft, thereby allowing the vehicle to run in the other of the front-wheel drive and the rear-wheel drive.

In the drive apparatus according to the fifth aspect of the invention, the first HEV mode is established as the drive mode, when the running speed of the vehicle is lower than the predetermined speed value and the driving load of the vehicle is lower than the predetermined load value. Thus, in a low running speed and low load range in which quietness is required, it is possible to prevent torque vibration of the engine from being transmitted to the first drive shaft, so that the required quietness can be obtained.

In the drive apparatus according to the sixth aspect of the invention, the second HEV mode is established as the drive mode, when the driving load of the vehicle is not lower than the predetermined load value. Thus, the energy efficiency can be improved in a high load range.

In the drive apparatus according to the seventh aspect of the invention, the third HEV mode is established as the drive mode, when the running speed of the vehicle is not lower than the predetermined speed value. Thus, the energy efficiency can be improved in a high running speed range.

In the drive apparatus according to the eighth aspect of the invention, the third HEV mode can be established as the drive mode in addition to the first HEV mode and the all-wheel drive mode. Thus, when the vehicle is caused to run with the engine being operated, the third HEV mode is established as the drive mode, for transmitting the torque to the first drive shaft, thereby allowing the vehicle to run in the other of the front-wheel drive and the rear-wheel drive.

In the drive apparatus according to the ninth aspect of the invention, in absence of the required ratio of the torque distribution between the first drive shaft and the second drive shaft, the drive mode to be established is determined based on the running speed of the vehicle and the driving load of the vehicle. In presence of the required ratio of the torque distribution, the all-wheel drive mode is established as the drive mode. Thus, in absence of the required ratio of the torque distribution, the drive mode can be determined appropriately depending on a required performance such as the quietness and the energy efficiency. In presence of the required ratio of the torque distribution, the vehicle can be caused to run in the all-wheel drive with the torque distribution being the required ratio.

In the drive apparatus according to the tenth aspect of the invention, in absence of the required ratio of the torque distribution, the first HEV mode is established as the drive mode when the running speed is lower than a predetermined speed value and the driving load is lower than a predetermined load value, the second HEV mode is established as the drive mode when the driving load is not lower than the predetermined load value, and the third HEV mode is established as the drive mode when the running speed is not lower than the predetermined speed value. Thus, in absence of the required ratio of the torque distribution, the drive mode can be determined appropriately depending on the required performance such as the quietness and the energy efficiency.

### BRIEF DESCRIPTION OF THE DRAWINGS

FIG 1 is a view schematically showing a construction of a vehicle provided with a vehicle drive apparatus (single pinion _U/D type) to which the present invention is applied;
FIG 2 is a view showing a construction of the vehicle drive apparatus, by using a collinear diagram;
FIG 3 is a view showing main parts of a control system for various controls in the vehicle drive apparatus;
FIG 4 is a collinear diagram for explaining BEV mode in which each of first and second electric motors is caused to generate a torque;
FIG 5 is a collinear diagram for explaining BEV mode in which the second electric motor is caused to generate the torque, with a brake being in its engaged state;
FIG 6 is a collinear diagram for explaining BEV mode in which a third electric motor is caused to generate the torque, with the brake being in the engaged state;
FIGS. 7A and 7B are collinear diagrams for explaining first HEV mode (series mode) in which an engine is driven and rotated, and an electric power is transferred between the first and third electric motors, wherein FIG 7A shows a case in which the third electric motor is caused to generate the torque by the electric power generated by the first electric motor, and FIG 7B shows a case in which an engine brake is generated by a power driving of the first electric motor that consumes the electric power generated by the third electric motor;
FIGS. 8A and 8B are collinear diagrams for explaining second HEV mode (input split mode) in which the engine is operated whereby the electric power is transferred between the second and third electric motors, wherein FIG 8A shows a case in which the third electric motor is caused to generate the torque by the electric power generated by the second electric motor, and FIG 8B shows a case in which the second electric motor is caused to generate the torque by the electric power generated by the third electric motor;
FIGS. 9A and 9B are collinear diagrams for explaining third HEV mode (output split mode) in which the engine is operated whereby the electric power is transferred between the first and second electric motors, wherein FIG 9A shows a case in which the second electric motor is caused to generate the torque by the electric power generated by the first electric motor, and FIG 9B shows a case in which the first electric motor is caused to generate the torque by the electric power generated by the second electric motor;
FIG 10 is a view showing an example of a drive-mode switching map to be used for controlling switching of a drive mode of the vehicle, wherein this example is to be used in a charged-power consuming driving;
FIG 11 is a view showing an example of the drive-mode switching map to be used for controlling switching of the drive mode, wherein this example is to be used in a charged-power maintaining driving;
FIG 12 is a view showing an example of the drive-mode switching map to be used for controlling switching of the drive mode, wherein this example is to be used in the charged-power consuming driving, and wherein a drive power (shown in FIG 10) is replaced by an accelerator opening degree;
FIG 13 is a view showing an example of the drive-mode switching map to be used for controlling switching of the drive mode, wherein this example is to be used in the charged-power maintaining driving, and wherein the drive power (shown in FIG 11) is replaced by the accelerator opening degree;
FIG 14 is a flow chart showing main parts of control operation of an electronic control apparatus, namely, a control routine executed by the electronic control apparatus for reducing vibration of a body of the vehicle while assuring performance of the vehicle in all-wheel drive, when the vehicle is caused to run with the engine being operated;
FIG 15 is a view showing, by way of example, a change of a front-rear torque distribution, in a case in which the control routine is executed as shown in the flow chart of FIG 14;
FIG 16 is a view showing, by way of another example, the change of the front-rear torque distribution, in the case in which the control routine is executed as shown in the flow chart of FIG 14;
FIG 17 is a view schematically showing a construction of a vehicle provided with a vehicle drive apparatus (single pinion _U/D type) to which the present invention is applied, wherein the vehicle and the vehicle drive apparatus are other than those shown in FIG 1;
FIG 18 is a view showing a construction of the vehicle drive apparatus shown in FIG 17, by using a collinear diagram;
FIG 19 is a view schematically showing a construction of a vehicle provided with a vehicle drive apparatus (double pinion_U/D type) to which the present invention is applied, wherein the vehicle and the vehicle drive apparatus are other than those shown in FIG 1;
FIG 20 is a view showing a construction of the vehicle drive apparatus shown in FIG 19, by using a collinear diagram;
FIG 21 is a view schematically showing a construction of a vehicle provided with a vehicle drive apparatus (double pinion_U/D type) to which the present invention is applied, wherein the vehicle and the vehicle drive apparatus are other than those shown in FIG 1; and
FIG 22 is a view showing a construction of the vehicle drive apparatus shown in FIG 21, by using a collinear diagram.

### DETAILED DESCRIPTION OF PREFERRED EMBODIMENTS

Hereinafter, embodiments of the invention will be described in detail with reference to the accompanying drawings.

### FIRST EMBODIMENT

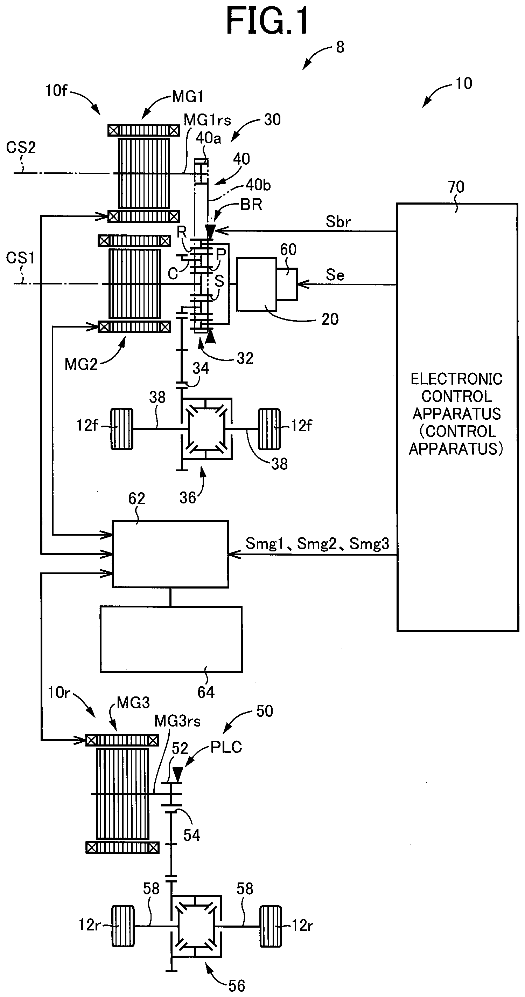

FIG 1 is a view schematically showing a construction of a vehicle 8 provided with a vehicle drive apparatus 10 to which the present invention is applied. As shown in FIG 1, the vehicle 8 includes drive wheels 12 and a vehicle drive apparatus 10. The drive wheels 12 consist of front right and left wheels 12f and rear right and left wheels 12r. The vehicle drive apparatus 10 includes a front drive portion 10f for driving the front wheels 12f and a rear drive portion 10r for driving the rear wheels 12r. It is noted that the above "right and left" refers to right and left relative to a forward direction of vehicle 8.

The front drive portion 10f includes an engine 20, a first electric motor MG1, a second electric motor MG2 and a front power transmission device 30. The rear drive portion 10r includes a third electric motor MG3 and a rear power transmission device 50. The vehicle 8 is a hybrid vehicle (HEV (hybrid electric vehicle)) or a plug-in hybrid vehicle (PHEV (plug-in hybrid electric vehicle)), and is an all-wheel drive vehicle in which the front wheels 12f and the rear wheels 12r are can be driven independent from one another. All wheel drive (AWD) and four wheel drive (4WD) are synonymous with each other. The vehicle drive apparatus 10 is capable of performing front-wheel drive for transmitting a torque to only the front wheels 12f, and also rear-wheel drive for transmitting the torque to only the rear wheels 12r.

The engine 20 is a known internal combustion engine, for example. An engine torque Te, which is the torque of the engine 20, is controlled with an engine control device 60 being controlled by an electronic control apparatus 70 that corresponds to "control apparatus" recited in appended claims. The engine control device 60 is provided in the front drive portion 10f, and includes a throttle actuator, a fuel injection device and a fuel ignition device.

Each of the first electric motor MG1, second electric motor MG2 and third electric motor MG3 is a so-called motor generator, i.e., a rotary electric machine having a function serving as a prime mover configured to generate a mechanical power from an electric power and also a function serving as an electric generator configured to generate the electric power from the mechanical power. The first, second and third electric motors MG1, MG2, MG3 are connected to a battery 64 provided in the vehicle drive apparatus 10, through an inverter 62 that is also provided in the vehicle drive apparatus 10. The torque of each of the first, second and third electric motors MG1, MG2, MG3 is controlled with the inverter 62 being controlled by the electronic control apparatus 70. The torque of the first electric motor MG1, the torque of the second electric motor MG2 and the torque of the third electric motor MG3 will be referred to as "first electric motor torque Tmg1", "second electric motor torque Tmg2" and "third electric motor torque Tmg3", respectively. The torque of each electric motor serves as a power driving torque when the electric motor functions as the prime mover, and serves as a regenerative torque when the electric motor functions as the electric generator. The battery 64 is an electric-power storage device configured to supply and receive the electric power to and from the first, second and third electric motors MG1, MG2, MG3. The first, second and third electric motors MG1, MG2, MG3 are controlled through the inverter 62 such that the electric power is supplied and received to and from all of them simultaneously. The term "simultaneously" means that the first, second and third electric motors MG1, MG2, MG3 are placed in power-driving or regeneration enabling states independently at the same time.

The front power transmission device 30 is provided in a power transmission path between the front wheels 12f and the power sources (i.e., the engine 20, first electric motor MG1 and second electric motor MG2). The front power transmission device 30 includes a differential mechanism 32, a front counter gear 34, a front differential gear device 36 and right and left front drive shafts 38. The differential mechanism 32 and the front differential gear device 36 are connected to each other through the front counter gear 34. The front drive shafts 38 are connected to the front differential gear device 36. The front power transmission device 30 is configured to transmit the powers of the engine 20 and the second electric motor MG2, for example, to the front wheels 12f. Each of the front drive shafts 38 corresponds to "first drive shaft" which is recited in the appended claims and which is provided to drive the front wheel 12f as one of the front and rear wheels 12f, 12r.

The differential mechanism 32 is a single-pinion-type planetary gear device including a sun gear S, pinion gears P, a carrier C supporting the pinion gears P, and a ring gear R meshing with the sun gear S through the pinion gears P, such that each of the pinion gears P is rotatable about its axis and revolvable about a first axis CS1. The sun gear S is connected to the second electric motor MG2. The ring gear R is connected to the engine 20 and the first electric motor MG1. The carrier C meshes with the front counter gear 34, and is connected to the front drive shafts 38.

The engine 20 and the second electric motor MG2 are disposed on the first axis CS1 that is a rotation axis of the differential mechanism 32. The first electric motor MG1 is disposed on the second axis CS2. The second axis CS2 is a rotation axis other than the first axis CS1, and is parallel with the first axis CS1. The front power transmission device 30 further includes a power transmission mechanism 40. The first electric motor MG1 is connected to the ring gear R of the differential mechanism 32 through the power transmission mechanism 40. The power transmission mechanism 40 includes an intermediate gear 40a and a belt 40b. The intermediate gear 40a is fixed to, for example, a rotor shaft MG1rs of the first electric motor MG1 such that the intermediate gear 40a is unrotatable relative to the rotor shaft MG1rs. The belt 40b is provided to connect between the intermediate gear 40a and the ring gear R. The intermediate gear 40a has a smaller diameter than that of the ring gear R, so that the power transmission mechanism 40 serves as a reduction mechanism, for example. With the first electric motor MG1 being disposed on the second axis CS2, the front drive portion 10f has a smaller size than a case in which the first electric motor MG1 is disposed on the first axis CS1.

The front power transmission device 30 further includes a brake BR that is connected at an end portion thereof to the ring gear R of the differential mechanism 32 and is connected at another end portion thereof to a non-rotatable member (not shown). The non-rotatable member, to which the brake BR is connected, is, for example, a casing that houses the front power transmission device 30 and other devices or members. The brake BR is an engagement device that is to be operated by a hydraulically or electrically operation actuator, for example, and each of the opposite end portions is to be selectively connected and disconnected. The brake BR serves as a brake mechanism configured to selectively stop rotation of the ring gear R of the differential mechanism 32, so that the ring gear R is to be selectively rotatable and unrotatable by operation of the brake BR.

The rear power transmission device 50 is provided in a power transmission path between the third electric motor MG3 and the rear wheels 12r. The rear power transmission device 50 includes an output gear 52, a rear counter gear 54, a rear differential gear device 56 and right and left rear drive shafts 58. The output gear 52 meshes with the rear counter gear 54, and is fixedly disposed on a rotor shaft MG3rs of the third electric motor MG3 such that the output gear 52 is unrotatable relative to the rotor shaft MG3rs. The output gear 52 and the rear differential gear device 56 are connected to each other through the rear counter gear 54. The rear drive shafts 58 are connected to the rear differential gear device 56. The output gear 52 has a smaller diameter than that of the rear counter gear 54, so that the output gear 52 and the rear counter gear 54 cooperate with each other to constitute a reduction mechanism, for example. The rear power transmission device 50 configured to transmit the power of the third electric motor MG3 to the rear wheels 12r. Each of the rear drive shafts 58 corresponds to "second drive shaft" which is recited in the appended claims and which is provided to drive the rear wheel 12r as the other of the front and rear wheels 12f, 12r. The third electric motor MG3 is connected to the rear drive shafts 58.

The rear power transmission device 50 further includes a parking mechanism PLC. The parking mechanism PLC has an end portion connected to a non-rotatable member (not shown). The parking mechanism PLC is operated by, for example, an electrically-operated actuator or a manually-operated mechanical actuator, and has another end portion that is to be engaged with or disengaged from the output gear 52 by operation of the actuator. The non-rotatable member to which the parking mechanism PLC is connected is, for example, a casing that houses the rear power transmission device 50 and other devices and members. The parking mechanism PLC is a known parking lock device that switches between a parking lock state in which the output gear 52 is mechanically fixed so as to be unrotatable and a non-parking lock state in which the output gear 52 is rotatable. The output gear 52 is a rotary member that is to be rotated together with the rear drive shafts 58. The output gear 52 and rear drive shafts 58 are selectively rotatable and unrotatable by operation of the parking mechanism PLC.

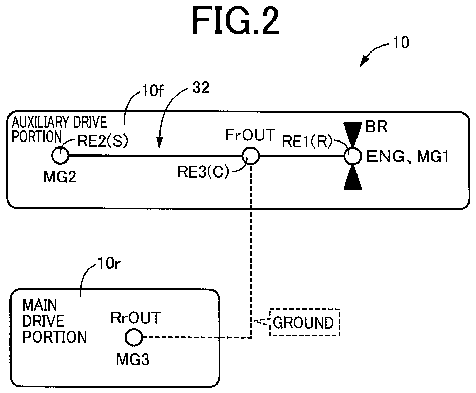

FIG 2 is a view showing a construction of the vehicle drive apparatus 10, by using a collinear diagram. The rear drive portion 10r is a main drive portion to be used for driving in preference to the front drive portion 10f, for example. Thus, the front drive portion 10f is to be used as an auxiliary drive portion. In FIG 2, "FrOUT" represents the front wheels 12f, and "RrOUT" represents the rear wheels 12r.

The differential mechanism 32 of the front drive portion 10f includes three rotary elements consisting of a first rotary element RE1, a second rotary element RE2 and a third rotary element RE3. Each of the rotary elements RE1-RE3 of the differential mechanism 32 is connected to an actuator. The collinear diagram of FIG 2 shows the three rotary elements of the differential mechanism 32 arranged in a straight line. Expressing using the collinear diagram, the first rotary element RE1 is the ring gear R. The first rotary element RE1 is connected to the engine 20 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 38, i.e., the front wheels 12f. The brake BR is a brake mechanism that is configured to stop rotation of the first rotary element RE1 by being placed in an engaged state.

The third electric motor MG3 of the rear drive portion 10r is connected to rear wheels 12r, and can therefore be considered to be connected to the front wheels 12f through a ground (see dashed line in FIG 2). It is possible to drive the vehicle 8 with the third electric motor MG3 being considered to be connected to the front wheels 12f, since the first, second and third electric motors MG1, MG2, MG3 are controlled such that the electric power is transferred among the first, second and third electric motors MG1, MG2, MG3 simultaneously.

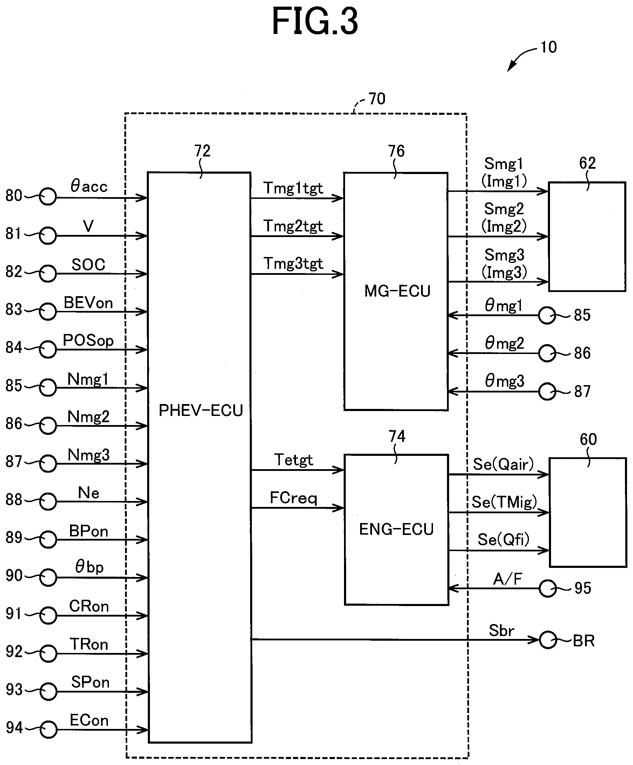

FIG 3 is a view showing main parts of a control system for various controls in the vehicle drive apparatus 10. As shown in FIGS. 1 and 3, the vehicle drive apparatus 10 is provided with the electronic control apparatus 70 as a controller including a processor that is configured to control the vehicle drive apparatus 10, for example. The electronic control apparatus 70 includes a so-called microcomputer incorporating a CPU, a ROM, a RAM and an input-output interface. The CPU performs various control operations of the vehicle 8, by processing various input signals, according to control programs stored in the ROM, while utilizing a temporary data storage function of the RAM. For example, the electronic control apparatus 70 controls outputs of the engine 20, the first electric motor MG1, the second electric motor MG2 and the third electric motor MG3, and also controls switching of a drive mode of the vehicle 8, which will be described later. The electronic control apparatus 70 is sectioned into a plurality of ECUs, as needed, which include a hybrid control ECU 72 (see "PHEV-ECU" shown in FIG 3), an engine control ECU 74 (see "ENG-ECU" shown in FIG 3) and an electric-motor control ECU 76 (see "MG-ECU " shown in FIG 3).

The hybrid control ECU 72 receives various input signals based on values detected by respective sensors provided in the vehicle 8. Specifically, the hybrid control ECU 72 receives: an output signal of an accelerator-opening degree sensor 80 indicative of an accelerator opening degree (accelerator operation degree) θacc; an output signal of a vehicle speed sensor 81 indicative a running speed V of the vehicle 8, an output signal of a battery sensor 82 indicative of a charged amount (state of charge) SOC; a BEV ON signal BEVon as an output signal of a BEV switch 83; an output signal of a shift position sensor 84 indicative of a shift operation position POSop; an output signal of a first-electric-motor speed sensor 85 indicative of a first electric motor speed Nmg1; an output signal of a second-electric-motor speed sensor 86 indicative of a second electric motor speed Nmg2; an output signal of a third-electric-motor speed sensor 87 indicative of a third electric motor speed Nmg3; an output signal of an engine speed sensor 88 indicative of an engine speed Ne; a brake ON signal BPon as an output signal of a brake switch 89; an output signal of a brake operation sensor 90 indicative of a brake operation amount θbp; a crawl ON signal CRon as an output signal of a crawl switch 91; a towing ON signal TRon as an output signal of a towing switch 92; a sport mode ON signal SPon as an output signal of a sport mode switch 93; and an eco mode ON signal ECon as an output signal of an eco mode switch 94.

The BEV switch 83 is a switch to be operated by a driver of the vehicle 8 when the drive requires a BEV driving of the vehicle 8. When the BEV switch 83 is operated, the BEV driving is performed with only the power of the battery 64 without the engine 20 being started. Each of the motor speed sensors 85, 86, 87 is constituted by a resolver, for example. The crawl switch 91 is a switch to be operated by the driver when a stage is anticipated in which the vehicle 8 runs at a very low speed with a high load on a rocky road, for example. The towing switch 92 is a switch to be operated by the driver when the vehicle 8 runs with a towed vehicle connected to a rear portion of the vehicle.

The sport mode switch 93 is a switch to be operated by the driver when a sport mode is to be established as a running mode of the vehicle 8. The eco mode switch 94 is a switch to be operated by the driver when an eco mode is to be established as the running mode. As the running mode, for example, a normal model is also available in addition to the sport mode and the eco mode. The normal mode is the running mode is for enabling the vehicle 8 to run with a fair energy efficiency and a fair power performance. The sport mode is the running mode suitable for a sport running for enabling the vehicle 8 to run with a higher priority being given to the power performance rather than to the energy efficiency, as compared with the normal mode. The eco mode is the running mode for enabling the vehicle 8 to run with a higher priority being given to the energy efficiency rather than to the power performance, as compared with the normal mode. It is noted that the normal mode is established as the running mode when neither the sport mode switch 93 nor the eco mode switch 94 is operated.

The accelerator opening degree θacc is an amount of accelerating operation made by the driver, which represents a magnitude of the accelerating operation made by the driver. The running speed V is a running speed of the vehicle 8. The charged amount SOC is represented by a battery charge/discharge current and/or a battery voltage, for example, detected by the battery sensor 82. The charged amount SOC is a remaining charge of the battery 64, and is calculated by the electronic control apparatus 70, based on the battery charge/discharge current and/or the battery voltage detected by the battery sensor 82. The battery sensor 82 also detects a temperature of the battery 64. The BEV ON signal BEVon is a signal indicating that the BEV switch 83 has been operated by the driver. The shift operation position POSop represents which one of lever positions such as "P", "R", "N", "D" a shift lever of a shift operation device is currently placed in. The first electric motor speed Nmg1 is a rotational speed of the first electric motor MG1. The second electric motor speed Nmg2 is a rotational speed of the second electric motor MG2. The third electric motor speed Nmg3 is a rotational speed of the third electric motor MG3. The engine rotational speed Ne is a rotational speed of engine 20. The brake ON signal BPon is a signal that indicates a state in which a brake pedal is being operated by the driver for activating wheel brakes. The brake operation amount θbp is a signal that indicates a magnitude of brake-pedal depression operation made by the driver, i.e., a magnitude of brake operation made by the driver, and is synonymous with a brake pedal depression force. The crawl ON signal CRo is a signal that indicates that the crawl switch 91 has been operated by the driver. The towing ON signal TRo is a signal that indicates that the towing switch 92 has been operated by the driver. The sport mode ON signal SPon is a signal that indicates that the sport mode switch 93 has been operated by the driver. The eco mode ON signal ECon is a signal that indicates that the eco mode switch 94 has been operated by the driver.

The engine control ECU 74 and the electric-motor control ECU 76 also receive various input signals based on values detected by respective sensors provided in the vehicle 8. Specifically, the engine control ECU 74 receives an output signal of an air-fuel ratio sensor 95 indicative of an air-fuel ratio A/F, for example. The electric-motor control ECU 76 receives an output signal of the first-electric-motor speed sensor 85 indicative of a first-electric-motor rotational angle θmg1, an output signal of the second-electric-motor speed sensor 86 indicative of a second-electric-motor rotational angle θmg2 and an output signal of the third-electric-motor speed sensor 87 indicative of a third-electric-motor rotational angle θmg3.

The air-fuel ratio A/F indicates the air-fuel ratio in an exhaust gas. The first-electric-motor rotational angle θmg1 indicates a rotational angle of a rotor of the first electric motor MG1, from a predetermined reference position. The second-electric-motor rotational angle θmg2 indicates a rotational angle of a rotor of the second electric motor MG2, from a predetermined reference position. The third-electric-motor rotational angle θmg3 is indicates a rotational angle of a rotor of the third electric motor MG3, from a predetermined reference position.

The hybrid control ECU 72 outputs various command signals supplied to the engine control ECU 74. The various command signals supplied to the engine control ECU 74 include a command signal indicative of a target engine torque Tetgt and a fuel-cut request signal FCreq requesting a fuel cut operation. The hybrid control ECU 72 outputs various command signals supplied to the electric-motor control ECU 76. The various command signals supplied to the electric-motor control ECU 76 include a command signal indicative of a target first-electric -motor torque Tmg1tgt, a command signal indicative of a target second-electric-motor torque Tmg2tgt and a command signal indicative of a target third-electric-motor torque Tmg3tgt. Further, the hybrid control ECU 72 outputs a command signal such as a brake-control command signal Sbr that is supplied to the brake BR, for example.

The target engine torque Tetgt is a target value of the engine torque Te. The fuel cut operation is a control operation for cutting off supply of fuel to the engine 20. The target first-electric-motor torque Tmg1tgt is a target value of the first electric motor torque Tmg1. The target second-electric-motor torque Tmg2tgt is a target value of the second electric motor torque Tmg2. The target third-electric-motor torque Tmg3tgt is a target value of the third electric motor torque Tmg3. The brake-control command signal Sbr is a request signal for controlling the brake BR to its ON state or OFF state. It is noted that, in the engagement device, the ON state is synonymous with the engaged state (= connecting state), and the OFF state is synonymous with the released state (= disconnecting state).

The engine control ECU 74 outputs an engine-control command signal Se supplied to the engine control device 60, for example. The engine-control command signal Se is a command signal for controlling the engine 20, and includes control signals for controlling an intake air quantity Qair, an ignition timing TMig and a fuel injection quantity Qfi.

The electric-motor control ECU 76 outputs a first-electric-motor-control command signal Smg1, a second-electric-motor-control command signal Smg2 and a third-electric-motor-control command signal Smg3 that are supplied to the inverter 62, for example. The first-electric-motor-control command signal Smg1 is a command signal for controlling the first electric motor MG1, and includes a control signal for controlling a first electric motor current Img1. The second-electric-motor-control command signal Smg2 is a command signal for controlling the second electric motor MG2, and includes a control signal for controlling a second electric motor current Img2. The third-electric-motor-control command signal Smg3 is a command signal for controlling the third electric motor MG3, and includes a control signal for controlling a third electric motor current Img2. The first electric motor current Img1 is an electric current for driving the first electric motor MG1. The second electric motor current Img2 is an electric current for driving the second electric motor MG2. The third electric motor current Img3 is an electric current for driving the third electric motor MG3.

The hybrid control ECU 72 determines the various command signals, based on intentions of the driver represented by the accelerator opening degree θacc and the brake operation amount θbp, and also the first electric motor speed Nmg1, the second electric motor speed Nmg2, the third electric motor speed Nmg3 and the engine rotational speed Ne, for example. Specifically, the hybrid control ECU 72 determines the brake-control command signal Sbr, and controls an operation state of the brake BR so as to place the brake BR into the engaged state or the released state. The engine control ECU 74 determines the engine-control command signal Se, based on the command signal representing the target engine torque Tetgt and the fuel-cut request signal FCreq requesting the fuel cut operation. The engine control ECU 74 controls the engine 20 by outputting the engine-control command signal Se. The electric-motor control ECU 76 determines the first, second and third electric-motor-control command signals Smg1, Smg2, Smg3, based on the target first-electric-motor torque Tmg1tgt, the target second-electric-motor torque Tmg2tgt and the target third-electric-motor torque Tmg3tgt. The electric-motor control ECU 76 outputs the first, second and third electric-motor-control command signals Smg1, Smg2, Smg3, and controls the first, second and third electric motors MG1, MG2, MG3.

Thus, the electronic control apparatus 70 is configured to control the engine 20 and the first through third electric motors MG1, MG2, MG3, and to place the drive mode of the vehicle 8 into a selected one of a plurality of modes. Further, the electronic control apparatus 70 controls the brake BG such that the brake BG is placed in the engaged state, as needed, upon switching of the drive mode.

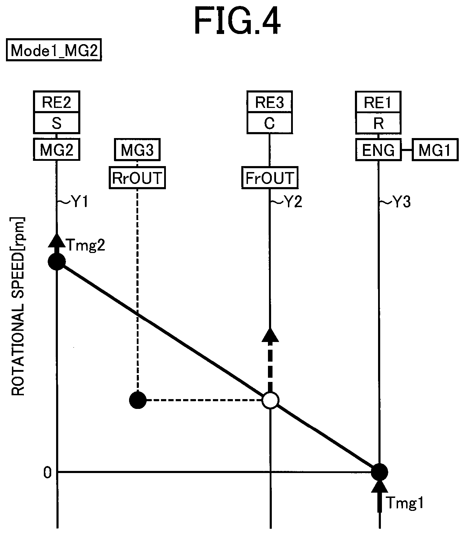

The plurality of modes into which the drive mode of the vehicle 8 can be placed, will be described with reference to FIGS. 4-9. Each of FIGS. 4-9 shows relative rotational speeds of the rotary elements RE1-RE3 of the differential mechanism 32 in the collinear diagram of FIG 2. In collinear diagram of each of FIGS. 4-9, vertical lines Y1-Y3 are arranged in this order as seen from a left side in each of FIGS. 4-9. The vertical line Y1 represents the rotational speed of the sun gear S as the second rotary element RE2 to which the second electric motor MG2 is connected. The vertical line Y2 represents the rotational speed of the carrier C as the third rotary element RE3 to which the front wheels 12f (see "FrOUT" in each of FIGS. 4-9) are connected. The vertical line Y3 represents the rotational speed of the ring gear R as the first rotary element RE1 to which the engine 20 (see "ENG" in each of FIGS. 4-9) and the first electric motor MG1 are connected. Each of FIGS. 4-9 also shows that the third electric motor MG3 connected to the rear wheels 12r (see "RrOUT" in each of FIGS. 4-9) is connected to the front wheels 12f through the ground. Further, each arrow shows the magnitude and direction of the torque converted onto an axis of a corresponding one of the rotary element RE1-RE3, and each solid arrow shows the torque outputted by the corresponding actuator while dashed arrow shows the torque transmitted mechanically.

FIG 4 is a collinear diagram for explaining Mode1_MG2, i.e., BEV mode as one of kinds of the Mode1 enabling the BEV driving, in which each of the first and second electric motors MG1, MG2 is caused to generate the torque. The Mode1_MG2 is one of the plurality of modes into which the drive mode of the vehicle 8 can be placed. In the Mode1_MG2, the BEV driving is performed, with each of the first and second electric motors MG1, MG2 being caused to generate the torque, and with the engine 20 being stopped. In the Mode1_MG2, each of the first and second electric motors MG1, MG2 supplies and receives the electric power to and from the battery 64, generating the torque, such that a moment around the third rotary element RE3 becomes zero thereby enabling the BEV driving. In this instance, the first electric motor torque Tmg1 is controlled such that drag of engine 20 does not occur, namely, such that the rotational speed of the first rotary element RE1 becomes zero. In the Mode1_MG2, the differential mechanism 32 is in a differential state, and the torque is generated from each of the first and second electric motors MG1, MG2, whereby the torque is mechanically transmitted to the third rotary element RE3 as an output element. It is noted that, in the Mode1_MG2, it is also possible to increase the drive torque by causing the third electric motor MG3 to generate the torque.

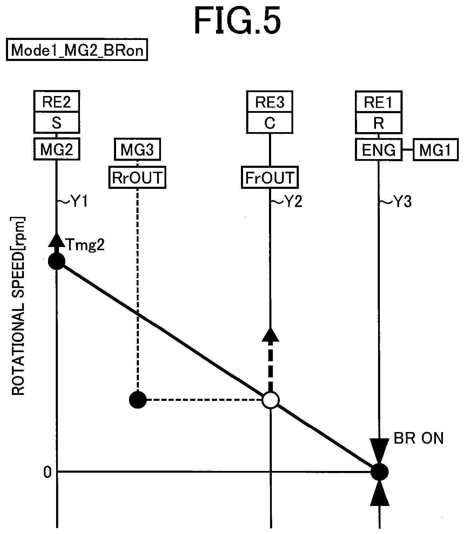

FIG 5 is a collinear diagram for explaining Mode1_MG2_BRon, i.e., BEV mode as another one of kinds of the Mode1 enabling the BEV driving, in which the second electric motor MG2 is caused to generate the torque, with the brake BR being in the engaged state. The Mode1_MG2_BRon is one of the plurality of modes into which the drive mode of the vehicle 8 can be placed. In the Mode1_MG2_BRon, the BEV driving is performed, with the second electric motor MG2 being caused to generate the torque, with the brake BR being in the engaged state, and with the engine 20 being stopped. In the Mode1_MG2_BRon, the brake BR is placed in the engaged state whereby the rotational speed of the first rotary element RE1 is fixed to zero, so that the BEV driving in either forward or reverse direction is enabled by the second electric motor MG2 with the electric power supplied from the battery 64 without the first electric motor MG1 being caused to generate the torque. In this instance, the BEV driving is enabled with a maximum torque of the second electric motor MG2. In the Mode1_MG2_BRon, the differential mechanism 32 is in the differential state, and the torque is generated from the second electric motor MG2, whereby the torque is mechanically transmitted to the third rotary element RE3 as the output element. It is noted that, in the Mode1_MG2_BRon, it is also possible to increase the drive torque by causing the third electric motor MG3 to generate the torque.

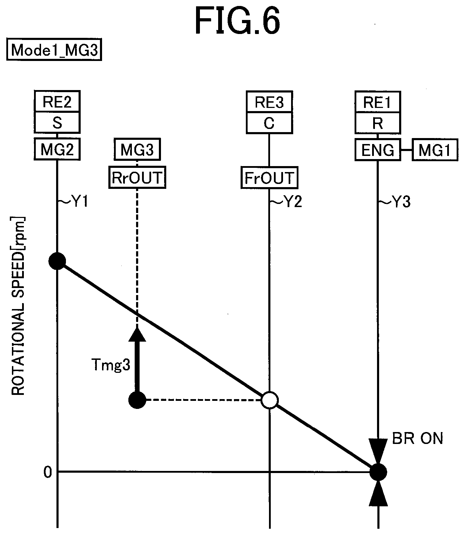

FIG 6 is a collinear diagram for explaining Mode1_MG3, i.e., BEV mode as still another one of kinds of the Mode1 enabling the BEV driving, in which the third electric motor MG3 is caused to generate the torque, with the brake BR being in the engaged state. The Mode1_MG3 is one of the plurality of modes into which the drive mode of the vehicle 8 can be placed. In the Mode1_MG3, the BEV driving is performed, with the third electric motor MG3 being caused to generate the torque, with the brake BR being in the engaged state, and with the engine 20 being stopped. In the Mode1_MG3, the brake BR is placed in the engaged state whereby the rotational speed of the first rotary element RE1 is fixed to zero, so that the BEV driving in either forward or reverse direction is enabled by the third electric motor MG3 with the electric power supplied from the battery 64 without the engine 20 and the first electric motor MG1 being dragged.

It is noted that, in the Mode1_MG3, it is also possible to increase the drive torque by causing the second electric motor MG2 to generate the torque. Further, in the Mode1_MG3, the BEV driving can be performed also by causing the third electric motor MG3 to generate the torque, even without the brake BR being placed in the engaged state. That is, the Mode1_MG3 may be also a mode in which the BEV driving is performed with the third electric motor MG3 being caused to generate the torque and with the engine 20 being stopped.

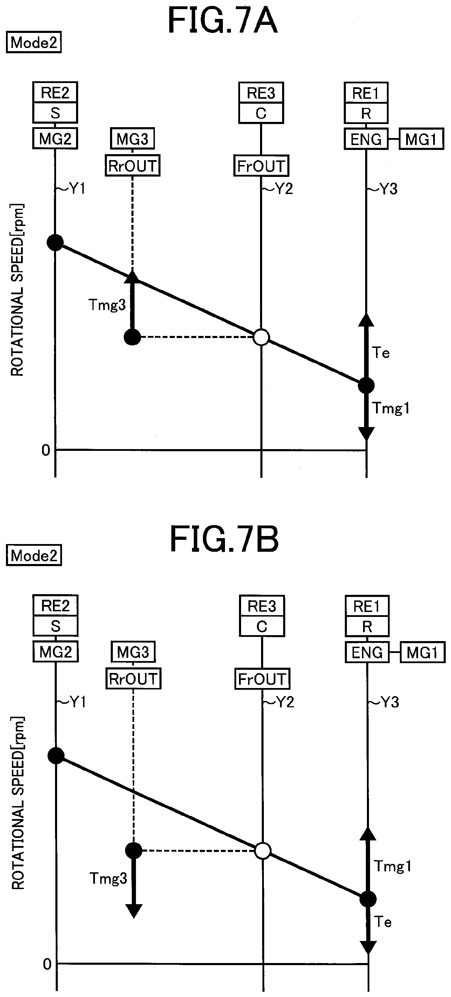

FIGS. 7A and 7B are collinear diagrams for explaining first HEV mode, i.e., Mode2 in which the engine 20 is driven and rotated , and the electric power is transferred between the first and third electric motors MG1, MG2, wherein FIG 7A shows a case in which the third electric motor MG3 is caused to generate the torque by the electric power generated by the first electric motor MG1, and FIG 7B shows a case in which an engine brake is generated by a power driving of the first electric motor MG1 that consumes the electric power generated by the third electric motor MG3. The Mode2 is one of the plurality of modes into which the drive mode of the vehicle 8 can be placed. The Mode2 is a mode enabling a hybrid driving, i.e., HEV driving, and is a series mode enabling a series driving with the engine 20 as the power source.

In the case shown in FIG 7A, the Mode2 includes a mode in which the first electric motor MG1 is operated as the electric generator by operation of the engine 20, and the third electric motor MG3 is operated as the prime mover by the electric power generated by the first electric motor MG1. The Mode2 is a mode which is for causing the vehicle 8 to run in the rear wheel drive as one of the front wheel drive and the rear wheel drive, by transmitting the torque to the rear drive shafts 58, and which can realize an electric-continuously-variable transmission function that performs a series mode operation in which the power inputted by the engine 20 is outputted to the rear wheels 12r with the brake BR being placed in the released state. In the Mode2, a power conversion is made between the engine 20 and the first electric motor MG1, and between the first electric motor MG1 and the third electric motor MG3. The power conversion means a conversion between the mechanical power and the electric power. In the Mode2, an explosive vibration torque of the engine 20 is not transmitted to the front drive shafts 38, so that the Mode2 is advantageous for suppressing NV. The term "NV" is a general term for noise and vibration such as muffled sound generated in the vehicle 8, and represents at least one of the noise and vibration in the vehicle 8. Therefore, the Mode2 is useful for use in a low running speed and low load range in which quietness is required. In addition, since the Mode2 is less subjected to restrictions such as the muffled sound when an operating point of engine 20 is to be set, it is possible to operate the engine 20 at an operating point at which a fuel efficiency is excellent.

In the case shown in FIG 7B, the Mode2 includes a mode in which the power driving of the first electric motor MG1 is performed with the electric power generated by the third electric motor MG3 that is operated as the electric generator, whereby the engine 20 is driven and rotated. In this Mode2, the electric power consumed by the power driving of the first electric motor MG1 is covered by the regenerative power of the third electric motor MG3, which is generated by a kinetic energy of the vehicle 8, and the engine rotational speed Ne is increased by the power driving of the first electric motor MG1. The engine 20 is in a fuel cut state, and the engine rotational speed Ne is increased by the first electric motor torque Tmg1, and the torque converted onto the axis of the first rotary element RE1 is considered to be a negative torque. Even where the engine 20 is operated with the fuel being injected thereto, if the engine rotational speed Ne is increased by the first electric motor torque Tmg1 to a higher speed vale than when the engine 20 is in an independent operating state, the torque converted onto the axis of the first rotary element RE1 is considered to be a negative torque. The positive direction of the torque is the direction of the torque in a case in which the engine 20 is operated. The case in which the engine 20 is operated is synonymous with a case in which the positive torque is generated by the engine 20 as such. In the Mode2 shown in FIG 7B, the kinetic energy of the vehicle 8 is converted into the electric power through the third electric motor MG3, and the electric power generated by the third electric motor MG3 is converted into the power through the first electric motor MG1. In this way, the engine brake can be applied in the Mode2. Where the engine brake is applied in the Mode2, too, the explosive vibration torque of the engine 20 is not transmitted to the front drive shafts 38, which is advantageous for suppressing the NV.

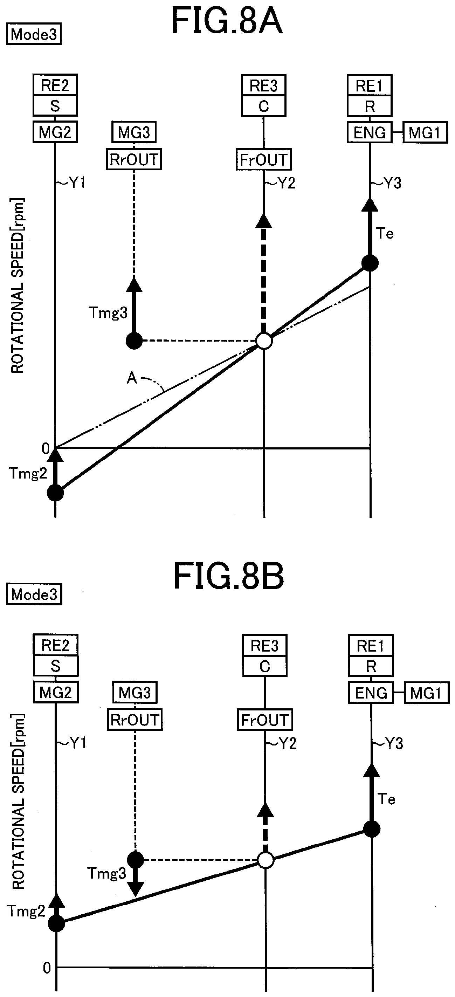

FIGS. 8A and 8B are collinear diagrams for explaining second HEV mode, i.e., Mode3 in which the engine 20 is operated whereby the electric power is transferred between the second and third electric motors MG2, MG3, wherein FIG 8A shows a case in which the third electric motor MG3 is caused to generate the torque by the electric power generated by the second electric motor MG2, and FIG 8B shows a case in which the second electric motor MG2 is caused to generate the torque by the electric power generated by the third electric motor MG3. The Mode3 is one of the plurality of modes into which the drive mode of the vehicle 8 can be placed. The Mode3 is a mode enabling the hybrid driving, i.e., HEV driving, and is an input split mode enabling an input split driving with the engine 20 as the power source. In the Mode3, the differential mechanism 32 is in the differential state, and a reaction force of the engine torque Te is taken by the second electric motor MG2, so that the torque is mechanically transmitted to the third rotary element RE3. The Mode3 is a mode that can realize the electric-continuously-variable transmission function that performs an input split mode operation in which the power inputted by the engine 20 is outputted to the front and rear wheels 12f, 12r with the brake BR being placed in the released state. In the Mode3, the engine brake can be applied. It is noted that the input split mode is a mode in which two electric motors (MG2, MG3) and an engine are connected to three rotary elements of a differential mechanism, and an electric motor (MG3) is placed on the output element (RE3), when expressed using a collinear diagram.

In FIG 8A, double-dashed line A in FIG 8A shows a state in which a mechanical point is created in the differential mechanism 32 in which no electrical work is made by setting the rotational speed of the second rotary element RE2 (second electric motor speed Nmg2) to zero so as to set the power of the second electric motor MG2 to zero. In the differential mechanism 32, the rotational speed of the third rotary element RE3 as the output element is set to a deceleration side, i.e., underdrive (U/D) side, relative to the engine rotational speed Ne at this mechanical point. That is, the mechanical point of the differential mechanism 32 is set by a reduction ratio. In FIGS. 8A and 8B, the Mode3 is the U/Dinput split mode.

In FIG 8A, the Mode3 includes at least a mode in which the engine 20 is operated whereby the second electric motor MG2 is operated as the electric generator, while the third electric motor MG3 is operated as the prime mover by the electric power generated by the second electric motor MG2. In the Mode3, the vehicle 8 is caused to run in all-wheel drive by transmitting the torque to the front drive shafts 38 and the rear drive shafts 58. In the Mode3, the torque is mechanically transmitted to the third rotary element RE3, and the electric power generated by the second electric motor MG2 is supplied to the third electric motor MG3 whereby the torque is generated in the third electric motor MG3. In the Mode3, the power conversion is made between the engine 20 and the second electric motor MG2, and between the second electric motor MG2 and the third electric motor MG3. The Mode3 provides a high transmission efficiency in the low running speed and high load range, so that it is useful in the low running speed and high load range, for example.

In FIG 8B, the Mode3 may include a mode in which the engine 20 is operated while the second electric motor MG2 is operated as the prime mover using the electric power generated by the third electric motor MG3. In this Mode3, when the torque is mechanically transmitted to the third rotary element RE3, the second electric motor MG2 is rotated in the forward direction, so that the electric power consumed by the power driving of the second electric motor MG2 is covered by the regenerative power of the third electric motor MG3 using the kinetic energy of the vehicle 8. In the Mode3 shown in FIG 8B, the kinetic energy of the vehicle 8 is converted into the electric power through the third electric motor MG3, and the electric power generated by the third electric motor MG3 is converted into the power through the second electric motor MG2.

The vehicle drive apparatus 10 is controlled to perform the Mode3 shown in FIG 8A during a normal driving in which the drive mode is selected with an energy efficiency being prioritized. On the other hand, the vehicle drive apparatus 10 is controlled to perform the Mode3 shown in FIG 8B, when the drive mode is selected with a power performance being prioritized, without the Mode3 shown in FIG 8A being is not executed.

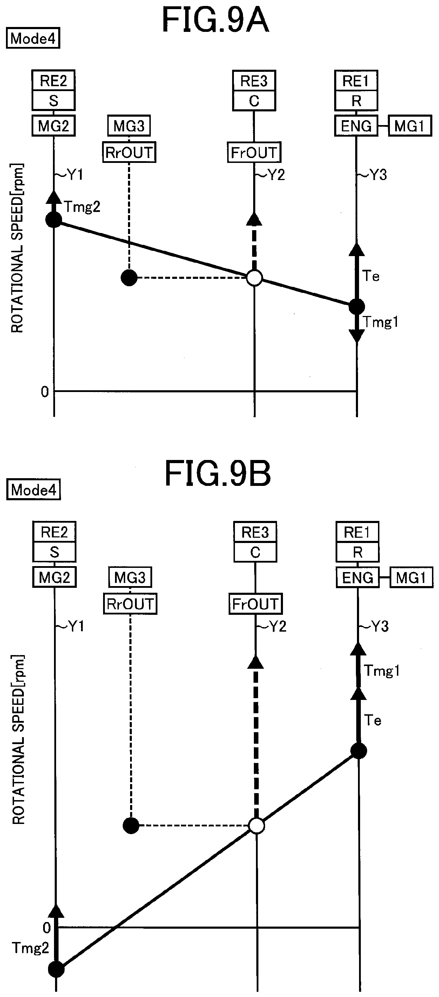

FIGS. 9A and 9B are collinear diagrams for explaining thid HEV mode, i.e., Mode4 in which the engine 20 is operated whereby the electric power is transferred between the first and second electric motors MG1, MG2, wherein FIG 9A shows a case in which the second electric motor MG2 is caused to generate the torque by the electric power generated by the first electric motor MG1, and FIG 9B shows a case in which the first electric motor MG1 is caused to generate the torque by the electric power generated by the second electric motor MG2. The Mode4 is one of the plurality of modes into which the drive mode of the vehicle 8 can be placed. The Mode4 is a mode enabling the hybrid driving, i.e., HEV driving, and is an output split mode enabling an output split driving with the engine 20 as the power source. In the Mode4, the differential mechanism 32 is in the differential state, and a reaction force of the engine torque Te is taken by the second electric motor MG2, so that the torque is mechanically transmitted to the third rotary element RE3. The Mode4 is a mode that can realize the electric-continuously-variable transmission function that performs an output split mode operation in which the power inputted by the engine 20 is outputted to the front wheels 12f with the brake BR being placed in the released state. In the Mode3, the engine brake can be applied. Since the mechanical point of the differential mechanism 32 is set by a reduction ratio, the Mode4 shown in FIGS. 9A and 9B is U/Doutput split mode. It is noted that the output split mode is a mode in which two electric motors (MG1, MG2) and an engine are connected to three rotary elements of a differential mechanism, and an electric motor (MG1) is placed on the input element (RE1) to which the engine is connected, when expressed using a collinear diagram.

In FIG 9A, the Mode4 includes at least a mode in which the engine 20 is operated whereby the first electric motor MG1 is operated as the electric generator, while the second electric motor MG2 is operated as the prime mover by the electric power generated by the first electric motor MG1. In Mode4, the vehicle 8 is caused to run in the front wheel drive that is the other of the front wheel drive and the rear wheel drive, by transmitting the torque to the front drive shafts 38. In Mode4, when the torque is mechanically transmitted to the third rotary element RE3, the second electric motor MG2 is rotated in the forward direction, so that the electric power consumed by the power driving of the second electric motor MG2 is covered by the electric power generated by the first electric motor MG1 using the power of the engine 20. In the Mode4, the power of the engine 20 is converted into the electric power through the first electric motor MG1, and the electric power generated by the first electric motor MG1 is converted into the power through the second electric motor MG2. The Mode4 provides a high transmission efficiency in the high running speed range, so that it is useful in the high running speed range, for example.

In FIG 9B, the Mode4 may include a mode in which the engine 20 is operated while the first electric motor MG1 is operated as the prime mover using the electric power generated by the second electric motor MG2. In this Mode4, when the torque is mechanically transmitted to the third rotary element RE3, the second electric motor MG2 is rotated in the reverse direction, so that the electric power generated by the second electric motor MG2 is supplied to the first electric motor MG1 whereby the torque is generated in the first electric motor MG1. In the Mode4 shown in FIG 9B, the power of the engine 20 is converted into the electric power through the second electric motor MG2, and the electric power generated by the second electric motor MG2 is converted into the power through the first electric motor MG1.

The vehicle drive apparatus 10 is controlled to perform the Mode4 shown in FIG 9A during the normal driving in which the drive mode is selected with the energy efficiency being prioritized. On the other hand, the vehicle drive apparatus 10 is controlled to perform the Mode4 shown in FIG 9B, when the drive mode is selected with a power performance being prioritized, without the Mode4 shown in FIG 9A being is not executed.

The processor of the electronic control apparatus 70 is capable of establishing any one of the Mode1, Mode2, Mode3 and Mode4 as the drive mode of the vehicle 8, and is configured to determine the drive mode to be establish, based on the running speed V and the driving load of the vehicle 8. The driving load is represented by, for example, the accelerator opening degree θacc. Alternatively, the driving load is represented by, for example, an actual value of a drive power Fr or a required value of the drive power Fr that is based on the accelerator opening degree θacc and the running speed V.

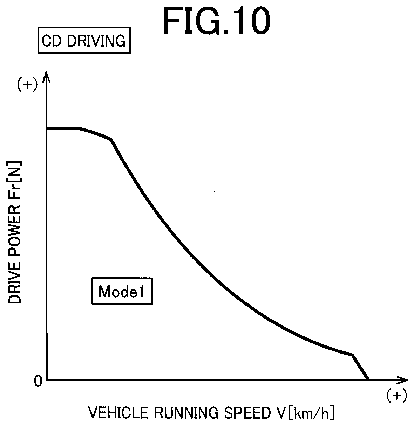

FIGS. 10-13 are views showing examples of a drive-mode switching map used for a control for switching the drive mode of the vehicle 8. The drive-mode switching map represents a predetermined relationship on a two-dimensional coordinate system with its horizontal axis indicative of the running speed V and with its vertical axis indicative of the driving load, wherein boundaries define areas that correspond to the respective modes. In other words, the drive-mode switching maps represent the predetermined relationship for determining which one of the modes the drive mode of the vehicle 8 is to be placed in.

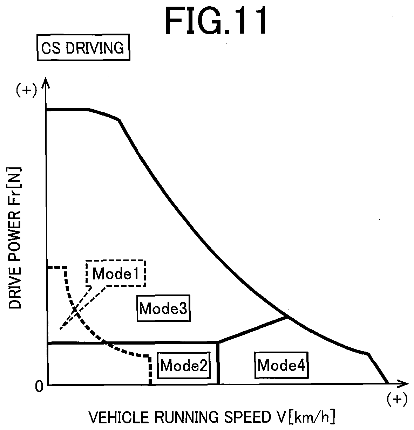

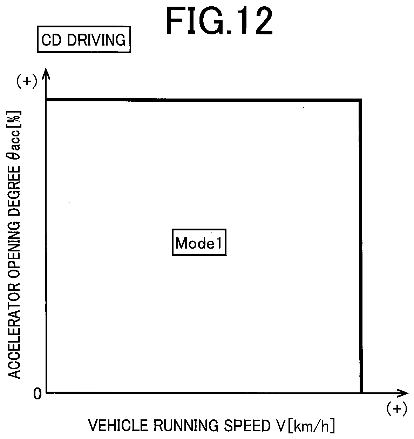

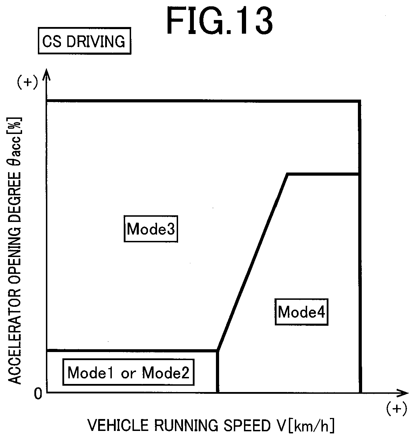

Each of FIGS. 10 and 11 shows a case in which the driving load is set to the drive power Fr, and each of FIGS. 12 and 13 shows a case in which the driving load is set to the accelerator opening degree θacc. FIG 12 shows the case in which the drive power Fr in FIG 10 is replaced with the accelerator opening degree θacc, and FIG 13 shows the case in which the drive power Fr in FIG 11 is replaced with the accelerator opening degree θacc. Each of FIGS. 10 and 12 shows the drive-mode switching map used in CD (charge depleting) driving in which the driving of the vehicle 8 is performed while the charged amount SOC is consumed. Each of FIGS. 11 and 13 shows the drive-mode switching map used in the CS (charge sustain) driving in which the driving of the vehicle 8 is performed while the charged amount SOC is maintained.

The drive-mode switching map shown in each of FIG 10 and FIG 12 is used, for example, in the PHEV (plug-in hybrid electric vehicle) equipped with the battery 64 having a relatively large capacity, when CD mode for CD driving, i.e., a charged-power consuming driving, is set. The drive-mode switching map shown in each of FIG 10 and FIG 12 may not be used in the HEV (hybrid electric vehicle) equipped with the battery 64 having a capacity smaller than that of the PHEV. The drive-mode switching map shown in each of FIG 11 and FIG 13 is used, for example, in the PHEV, when CS mode for CS driving, i.e., charged-power maintaining driving, is set. Alternatively, the drive-mode switching map shown in each of FIG 11 and FIG 13 is used, for example, in the BEV.

When the CD mode is set and the charged amount SOC is sufficiently large, the drive-mode switching map shown in FIG 10 or FIG 12 is selected, so that the Mode1 is set in an entire range. When the CD mode is set but the charged amount SOC is small, or when the CS mode is set, the drive-mode switching map shown in FIG 11 or FIG 13 is selected. In the drive-mode switching map shown in FIG 11 or FIG 13, the Mode2 is set in the low running speed and low load range in which the muffled sound is likely to be problematic, the Mode3, which provides high transmission efficiency in the high load range, is set in the high driving load range, and the Mode4, which provides excellent transmission efficiency in an overdrive gear ratio that is often used at a high running speed of the vehicle 8, is set to the high running speed range. Even when the charged amount SOC is small and a range available with the charged amount SOC is small, the Mode1 may be set in a range in which the power outputted from the battery 64 is small, as long as consumption of the charged amount SOC is allowed. Further, when an operating efficiency of the engine 20 is poor, the Mode1 may be set. The Mode1 is set in the low running speed and low load range, depending on the charged amount SOC.

In the drive-mode switching map shown in FIG 11 or FIG 13, it can be seen that the Mode3 is set as the drive mode in the low running speed and high load range, and that the Mode4 is set as the drive mode in the high running speed range. Or, from another point view, it can be seen that Mode3 is set as the drive mode in the high load range, and that Mode4 is set as the drive mode in the high running speed and low load range.

The processor of the electronic control apparatus 70 is configured to establish the Mode2 as the drive mode of the vehicle 8 in the low running speed and low load range, namely, when the running speed V is lower than a predetermined speed value and the driving load is lower than a predetermined load value. The processor of the electronic control apparatus 70 is configured to establish the Mode3 as the drive mode in the high load range, namely, when the driving load is not lower than the predetermined load value. The processor of the electronic control apparatus 70 is configured to establish the Mode4 as the drive mode in the high running speed range, namely, when the running speed V is not lower than the predetermined speed value. The predetermined speed value is a predetermined threshold value used for determining the drive mode to be established, by determining whether the running speed V is in the low running speed range or in the high running speed range, for example. The predetermined load value is a predetermined threshold value used for determining the drive mode to be established, by determining whether the driving load is in the low load range or in the high load range, for example.

There will be described a torque distribution between the first drive shafts 38 and the second drive shafts 58 when the vehicle 8 is caused to run with the engine 20 being operated. The torque distribution between the first drive shafts 38 and the second drive shafts 58 is synonymous a front-rear torque distribution, i.e., a ratio of distribution of the torque between the front wheels 12f and the rear wheels 12r.

In the Mode2, the front-rear torque distribution is set to 100% on side of the rear wheels 12r. In the Mode4, the front-rear torque distribution is set to 100% on side of the front wheels 12f. In the Mode3, the front-rear torque distribution is determined depending on circumstances such as the operating point of the engine 20 for the excellent energy efficiency, the gear ratio in the differential mechanism 32 at that time and the engine torque Te at that time, wherein the gear ratio in the differential mechanism 32 is determined based on the engine rotational speed Ne and running speed V at that time. In the drive mode (Mode2, Mode3, Mode4) that is set by using the drive-mode switching map, there are restrictions on the front-rear torque distribution, so that it could be difficult to respond to changes in the front-rear torque distribution, which are required by the intentions of the driver and/or requirements for motion function of the vehicle 8.

Therefore, the processor of the electronic control apparatus 70 is configured to be capable of establishing, apart from the Mode3, an all-wheel drive mode in which the vehicle 8 is caused to run in the all-wheel drive by transmitting the torque to the front drive shafts 38 and the rear drive shafts 58. In the all-wheel drive mode, the electric power is transferred between the first electric motor MG1 and the second electric motor MG2 by operating the engine 20 while the third electric motor MG3 is operated as the prime mover.

The processor of the electronic control apparatus 70 is configured to control the first, second and third electric motors MG1, MG2, MG3 such that the front-rear torque distribution becomes a required ratio in the all-wheel drive mode.

The required ratio is a required value or ratio of the front-rear torque distribution. The required ratio is, for example, the required ratio of the front-rear torque distribution required when the drive has an intension of performing a sport running of the vehicle 8, the required ratio of the front-rear torque distribution required by the driver, or the required ratio of the front-rear torque distribution required by the motion function of the vehicle 8. The motion function of the vehicle 8 is, for example, a function of controlling a running posture of the vehicle 8. The required ratio of the front-rear torque distribution required by the motion function of the vehicle 8 is based on a requirement to reduce the drive torque distribution to the front wheels 12f and increase the drive torque distribution to the rear wheels 12r when the vehicle 8 is in an understeer state while turning, or based on a requirement to increase the drive torque distribution to the front wheels 12f and reduce the drive torque distribution to the rear wheels 12r when the vehicle 8 is in an oversteer state while turning.

The processor of the electronic control apparatus 70 is configured, in any drive mode that is set using a drive-mode switching map (see the CS mode), to control the first, second and third electric motors MG1, MG2, MG3 such that an electric power balance BLep falls within a predetermined range RNGep. The electric power balance BLep is an electric power balance in the first, second and third electric motors MG1, MG2, MG3, and is synonymous with an input/output power, i.e., a charging/discharging power in the battery 64. The predetermined range RNGep is, for example, a predetermined power range near zero [kW] in which the charged amount (state of charge) SOC of the battery 64 is likely to be maintained.

It is preferable that the electric power balance BLep falls within the predetermined range RNGep even in the all-wheel drive mode. Further, it is preferable that the front-rear torque distribution is changed such that the operating point of the engine 20 is maintained, namely, the gear ratio of the differential mechanism 32 is maintained, in the all-wheel drive mode. The processor of the electronic control apparatus 70 is configured to control the first, second and third electric motors MG1, MG2, MG3 such that the electric power balance BLep falls within the predetermined range RNGep in the all-wheel drive mode.

The processor of the electronic control apparatus 70 determines the drive mode to be established, by using the drive-mode switching map, for example, when the vehicle 8 is to be driven with a higher priority being given to the energy efficiency. That is, in absence of the required ratio of the front-rear torque distribution, the processor of the electronic control apparatus 70 determines the drive mode to be established, based on the running speed V and the driving load of the vehicle 8. On the other hand, in presence of the required ratio of the front-rear torque distribution, the processor of the electronic control apparatus 70 establishes the all-wheel drive mode as the drive mode.

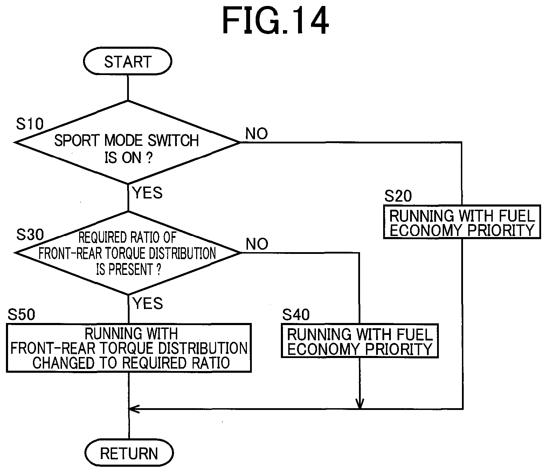

FIG 14 is a flow chart showing main parts of control operation of the electronic control apparatus 70, namely, a control routine executed by the electronic control apparatus 70 for reducing vibration of a body of the vehicle 8 while assuring performance of the vehicle 8 in the all-wheel drive, when the vehicle 8 is caused to run with the engine 20 being operated. This control routine is executed in a repeated manner, for example.

Each step in the control routine shown in the flow chart of FIG 14 corresponds to function of the hybrid control ECU 72. The control routine is initiated with step S10 that is implemented to determine whether causing the vehicle 8 to run with a changed front-rear torque distribution is desired or not, namely, whether the sport mode switch 93 has been operated or not. When a negative determination is made at step S10, the control flow goes to step S20 at which the drive mode is determined by using the drive-mode switching map and the determined drive mode is established, namely, the vehicle 8 is caused to run with a higher priority being normally given to a fuel economy, i.e., an energy efficiency. When an affirmative determination is made at step S10, step S30 is implemented to determine whether there is a specific ratio as the required ratio of the front-rear torque distribution, due to a driving state of the vehicle 8. When a negative determination is made at step S30, the control flow goes to step S40 at which the vehicle 8 is caused to run with a higher priority being normally given to the fuel economy. When an affirmative determination is made at step S30, step S50 is implemented to establish the all-wheel drive mode as the drive mode, so that the vehicle 8 is caused to run with the front-rear torque distribution being to the specific ratio as the required ratio of the front-rear torque distribution.

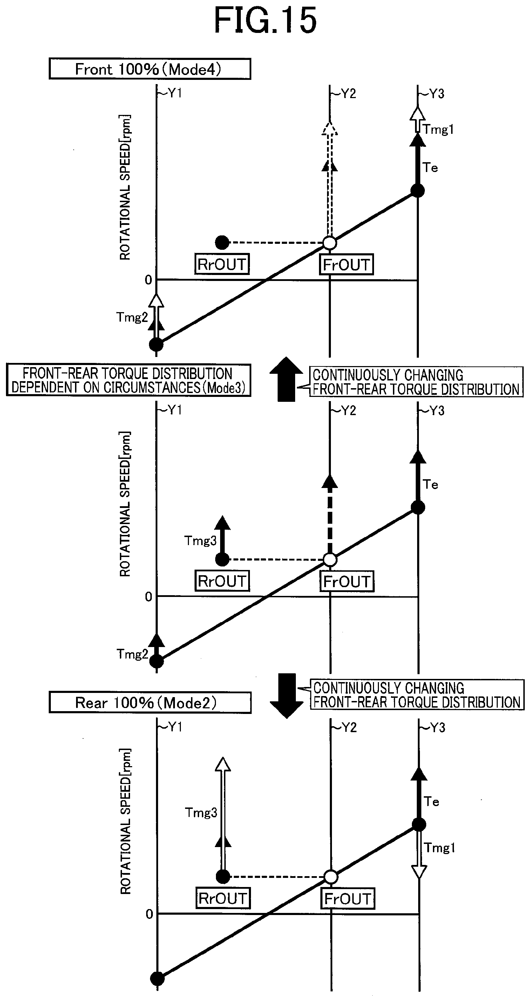

FIG 15 is a view showing, by way of example, a change of the front-rear torque distribution, in a case in which the control routine is executed as shown in the flow chart of FIG 14. In FIG 15, the current driving state is a driving state in which the Mode3 is established as the drive mode with use of the drive-mode switching map, for example, and each white arrow indicates torque that has been changed or added from state of the Mode3. When there is a specific ratio as the required ratio of the front-rear torque distribution in the current driving state, the all-wheel drive mode is established and the first electric motor torque Tmg1 is changed to change the front-rear torque distribution in the Mode3. For example, when the first electric motor torque Tmg1 as a positive torque is added in the state of the Mode3, the second electric motor torque Tmg2 as a positive torque is increased to maintain the gear ratio of the differential mechanism 32, whereby the drive torque of the front wheels 12f is increased. In this instance, the first, second and third electric motors MG1, MG2, MG3 are controlled such that the electric power balance BLep falls within the predetermined range RNGep, so that the third electric motor torque Tmg3 as a positive torque is reduced, whereby the drive torque of the rear wheels 12r is reduced. When the first electric motor torque Tmg1 as the positive torque has been increased until the drive torque of the rear wheels 12r becomes zero, the Mode4 is established. Thus, the front-rear torque distribution can be changed continuously between the Mode3 and the Mode4 in the all-wheel drive mode. Further, when the first electric motor torque Tmg1 as a negative torque is added in the state of the Mode3, the second electric motor torque Tmg2 as the positive torque is reduced to maintain the gear ratio of the differential mechanism 32, whereby the drive torque of the front wheels 12f is reduced. In this instance, the first, second and third electric motors MG1, MG2, MG3 are controlled such that the electric power balance BLep falls within the predetermined range RNGep, so that the positive torque of the third electric motor torque Tmg3 is increased, whereby the drive torque of the rear wheels 12r is increased. When the first electric motor torque Tmg1 as the negative torque has been increased until the drive torque of the rear wheels 12f becomes zero, the Mode2 is established. Thus, the front-rear torque distribution to be changed continuously between the Mode3 and the Mode2 in the all-wheel drive mode. In this way, in the all-wheel drive mode, the vehicle 8 can be caused to run with the front-rear torque distribution being changed to the required ratio of the front-rear torque distribution.

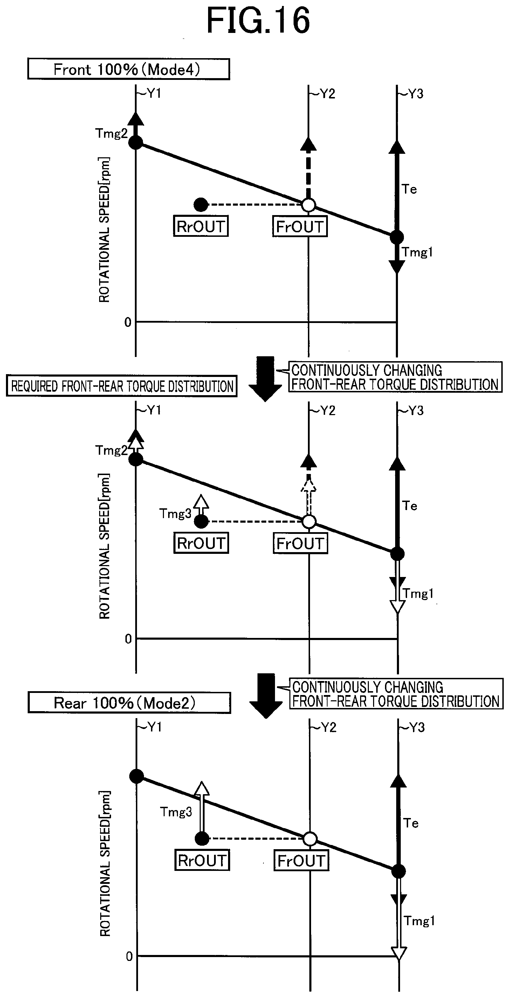

FIG 16 is a view showing, by way of another example, the change of the front-rear torque distribution, in the case in which the control routine is executed as shown in the flow chart of FIG 14. The example shown in FIG 16 is different from that shown in FIG 15. In FIG 16, the current driving state is a driving state in which the Mode4 is established as the drive mode with use of the drive-mode switching map, for example, and each white arrow indicates torque that has been changed or added from state of the Mode4. When there is a specific ratio as the required ratio of the front-rear torque distribution in the current driving state, the all-wheel drive mode is established and the first electric motor torque Tmg1 is changed to change the front-rear torque distribution in the Mode4 with the torque distribution being set to 100% on side of the front wheels 12f. For example, when the first electric motor torque Tmg1 as a negative torque is added in the state of the Mode4, the second electric motor torque Tmg2 as a positive torque is reduced to maintain the gear ratio of the differential mechanism 32, whereby the drive torque of the front wheels 12f is reduced. In this instance, the first, second and third electric motors MG1, MG2, MG3 are controlled such that the electric power balance BLep falls within the predetermined range RNGep, so that the third electric motor torque Tmg3 as a positive torque is added, whereby the drive torque is added to the rear wheels 12r. When the first electric motor torque Tmg1 as the negative torque has been increased until the drive torque of the front wheels 12f is replaced by the drive torque of the rear wheels 12r, the Mode2 is established. Thus, the front-rear torque distribution can be changed continuously between the Mode4 and the Mode2 in the all-wheel drive mode. In this way, in the all-wheel drive mode, the vehicle 8 can be caused to run with the front-rear torque distribution being changed to the required ratio of the front-rear torque distribution.

As described above, in the present embodiment, the engine 20 and the first electric motor MG1 are connected to the first rotary element RE1 of the differential mechanism 32, the second electric motor MG2 is connected to the second rotary element RE2 of the differential mechanism 32, and the front drive shafts 38 are connected to the third rotary element RE3 of the differential mechanism 32. The third electric motor MG3 is connected to the rear drive shafts 58. As the drive mode of the vehicle 8, at least the Mode2 and the all-wheel drive mode are established by controlling the engine 20, first electric motor MG1, second electric motor MG2 and third electric motor MG3. In the all-wheel drive mode, the first, second and third electric motors MG1, MG2, MG3 are controlled such that the front-rear torque distribution becomes the required ratio. Thus, when the vehicle 8 is caused to run with the engine 20 being operated, a so-called series driving can be performed with the Mode2 being established as the drive mode. In the series driving, the vehicle 8 can be caused to run in the rear-wheel drive, by transmitting the torque to the rear drive shafts 58, so that it is possible to prevent torque vibration of the engine 20 being transmitted to the front drive shafts 38. Further, when the vehicle 8 is caused to run with the engine 20 being operated, the vehicle 8 can be caused to run in the all-wheel drive by establishing the all-wheel drive mode as the drive mode. In the all-wheel drive mode, the torque is transmitted to the front drive shafts 38 and the rear drive shafts 58 in accordance with the required ratio of the front-rear torque distribution. Thus, when the vehicle 8 is caused to run with the engine 20 being operated, it is possible to reduce vibration of the body of the vehicle 8 while assuring performance of the vehicle 8 in the all-wheel drive.

In the present embodiment, when the all-wheel drive mode is established, the first, second and third electric motors MG1, MG2, MG3 are controlled such that the electric power balance BLep falls within the predetermined range RNGep. Thus, irrespective of the charged amount (state of charge) SOC of the battery 64, it is possible to control the first, second and third electric motors MG1, MG2, MG3 such that the front-rear torque distribution becomes the required ratio.

In the present embodiment, the Mode3 can be further established as the drive mode. Thus, when the vehicle 8 is caused to run with the engine 20 being operated, the Mode3 is established as the drive mode, for improving energy efficiency, while transmitting the torque to the front drive shafts 38 and the rear drive shafts 58, thereby allowing the vehicle 8 to run in the all-wheel drive.

In the present embodiment, the Mode4 can be further established as the drive mode. Thus, when the vehicle 8 is caused to run with the engine 20 being operated, the Mode4 is established as the drive mode, for transmitting the torque to the front drive shafts 38, thereby allowing the vehicle 8 to run in the front-wheel drive.

In the present embodiment, the Mode2 is established as the drive mode, when the running speed V of the vehicle 8 is lower than the predetermined speed value and the driving load of the vehicle 8 is lower than the predetermined load value. Thus, in the low running speed and low load range in which quietness is required, it is possible to prevent torque vibration of the engine 20 from being transmitted to the front drive shafts 38, so that the required quietness can be obtained.

In the present embodiment, the Mode3 is established as the drive mode, when the driving load of the vehicle 8 is not lower than the predetermined load value. Thus, the energy efficiency can be improved in the high load range.

In the present embodiment, the Mode4 is established as the drive mode, when the running speed V of the vehicle 8 is not lower than the predetermined speed value. Thus, the energy efficiency can be improved in the high running speed range.

In the present embodiment, in absence of the required ratio of the front-rear torque distribution, the drive mode to be established is determined based on the running speed V and the driving load of the vehicle 8. In presence of the required ratio of the front-rear torque distribution, the all-wheel drive mode is established as the drive mode. Thus, in absence of the required ratio of the front-rear torque distribution, the drive mode can be determined appropriately depending on a required performance such as the quietness and the energy efficiency. In presence of the required ratio of the front-rear torque distribution, the vehicle 8 can be caused to run in the all-wheel drive with the front-rear torque distribution being the required ratio.

In the present embodiment, in absence of the required ratio of the front-rear torque distribution, the Mode2 is established as the drive mode when the running speed V is lower than the predetermined speed value and the driving load is lower than the predetermined load value, the Mode3 is established as the drive mode when the driving load is not lower than the predetermined load value, and the Mode4 is established as the drive mode when the running speed V is not lower than the predetermined speed value. Thus, in absence of the required ratio of the front-rear torque distribution, the drive mode can be determined appropriately depending on the required performance such as the quietness and the energy efficiency.

There will be described other embodiments of this invention. The same reference signs as used in the above-described first embodiment will be used in the following embodiments, to identify the functionally corresponding elements, and descriptions thereof are not provided.

### SECOND EMBODIMENT

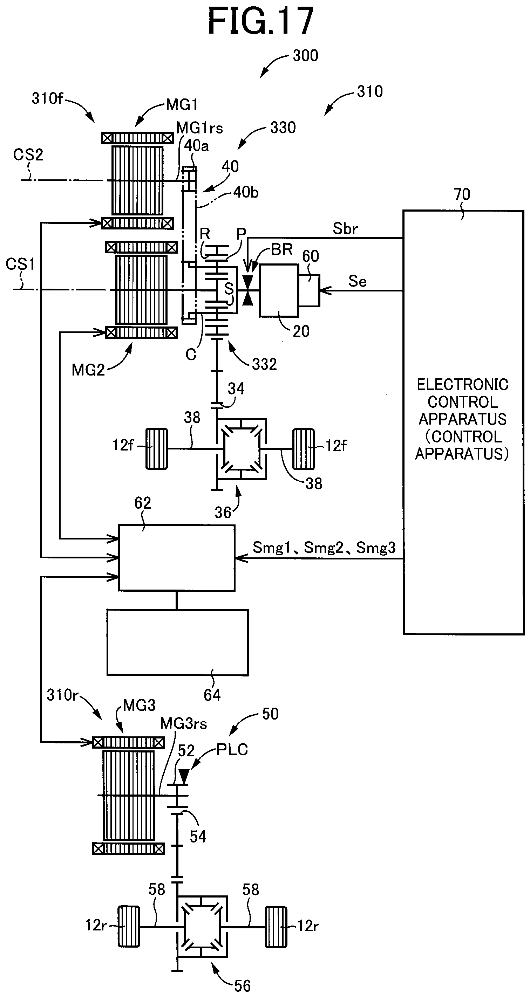

FIG 17 is a view schematically showing a construction of a vehicle 300 provided with a vehicle drive apparatus 310 (including a front drive portion 310f and a rear drive portion 310r) to which the present invention is applied. As shown in FIG 17, a front power transmission device 330 of the front drive portion 310f includes a differential mechanism 332. The differential mechanism 332 and the front differential gear device 36 are connected to each other through the front counter gear 34, as in the front power transmission device 30 in the above-described first embodiment.

The differential mechanism 332 is a single-pinion type planetary gear device having a sun gear S, pinion gears P, a carrier C and a ring gear R. The second electric motor MG2 is connected to the sun gear S. The engine 20 and the first electric motor MG1 are connected to the carrier C. The first electric motor MG1 is connected to the carrier C through the power transmission mechanism 40. The ring gear R meshes with the front counter gear 34. The front drive shafts 38 are connected to the ring gear R. The brake BR is connected at an end portion thereof to the output shaft of the engine 20 or the carrier C, and is connected at another end portion thereof to a non-rotatable member (not shown) such as a casing.

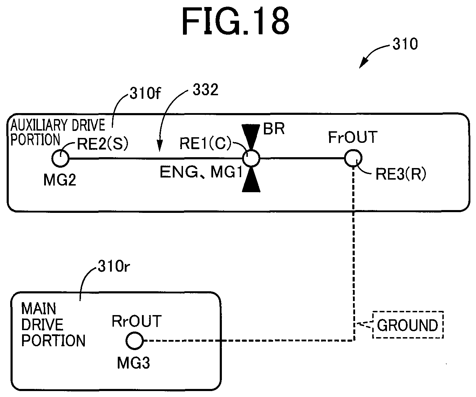

FIG 18 is a view showing a construction of the vehicle drive apparatus 310, by using a collinear diagram. The differential mechanism 332 of the front drive portion 310f includes three rotary elements consisting of the first rotary element RE1, the second rotary element RE2 and the third rotary element RE3. Each of the rotary elements RE1-RE3 of the differential mechanism 332 is connected to an actuator. Expressing using the collinear diagram, the first rotary element RE1 is the carrier C. The first rotary element RE1 is connected to the engine 20 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 310r has substantially the same construction as the rear drive portion 10r in the above-described first embodiment, so that its description is not provided.

As in the vehicle drive apparatus 10 of the above-described first embodiment, in the vehicle drive apparatus 310, the drive mode can be switched among the plurality of modes, with the engine 20 and the first through third electric motors MG1, MG2, MG3 being controlled by the processor of the electronic control apparatus 70. Further, in the vehicle drive apparatus 310, the processor of the electronic control apparatus 70 controls the brake BG such that the brake BG is placed in the engaged state, as needed, upon switching of the drive mode.

In the differential mechanism 332, the rotational speed of the third rotary element RE3 as the output element is set to an acceleration side, i.e., overdrive (O/D) side, relative to the engine rotational speed Ne at the mechanical point. That is, the mechanical point of the differential mechanism 332 is set by an increase ratio. Therefore, in the vehicle drive apparatus 310, the Mode3 is the O/Dinput split mode, and the Mode4 is the O/Doutput split mode.

As described above, in the present second embodiment, the same effects as those of the above-described first embodiment can be obtained.

### THIRD EMBODIMENT

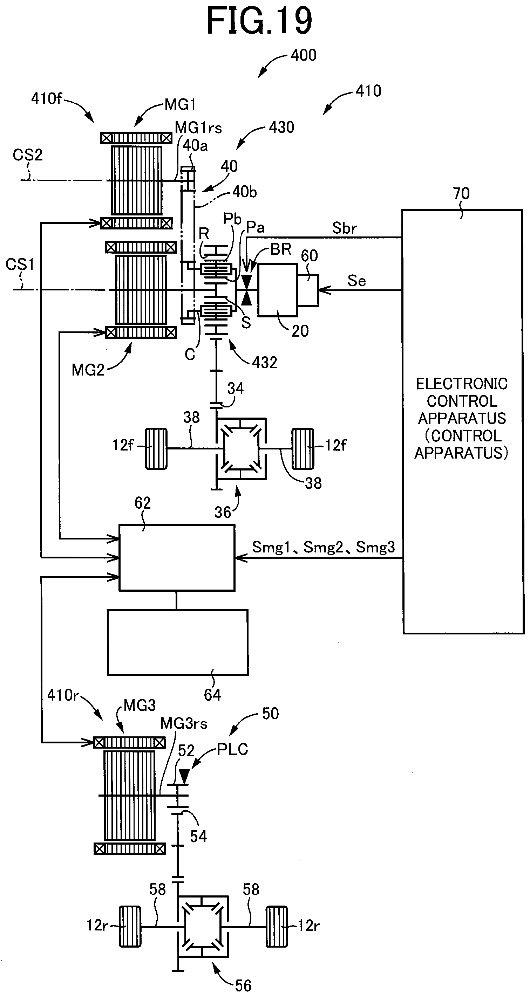

FIG 19 is a view schematically showing a construction of a vehicle 400 provided with a vehicle drive apparatus 410 (including a front drive portion 410f and a rear drive portion 410r) to which the present invention is applied. As shown in FIG 19, a front power transmission device 430 of the front drive portion 410f includes a differential mechanism 432. The differential mechanism 432 and the front differential gear device 36 are connected to each other through the front counter gear 34, as in the front power transmission device 30 in the above-described first embodiment.

The differential mechanism 432 is a double-pinion type planetary gear device having a sun gear S, pinion gears Pa, Pb, a carrier C and a ring gear R. The pinion gears Pa, Pb constitute a plurality of pairs of pinion gears, wherein each of the plurality of pairs of pinion gears consists of the pinion gears Pa, Pb meshing with each other. The second electric motor MG2 is connected to the sun gear S. The engine 20 and the first electric motor MG1 are connected to the carrier C. The first electric motor MG1 is connected to the carrier C through the power transmission mechanism 40. The ring gear R meshes with the front counter gear 34. The front drive shafts 38 are connected to the ring gear R. The brake BR is connected at an end portion thereof to the output shaft of the engine 20 or the carrier C, and is connected at another end portion thereof to a non-rotatable member (not shown) such as a casing.

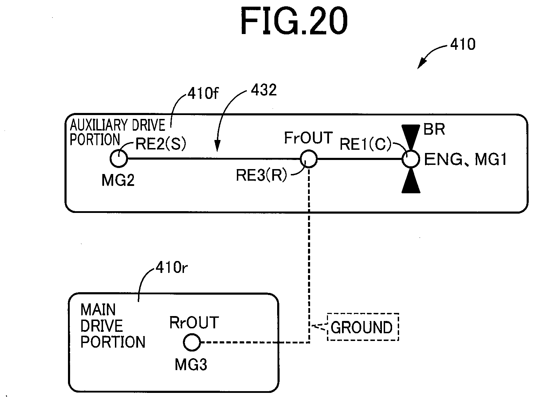

FIG 20 is a view showing a construction of the vehicle drive apparatus 410, by using a collinear diagram. The differential mechanism 432 of the front drive portion 410f includes three rotary elements consisting of the first rotary element RE1, the second rotary element RE2 and the third rotary element RE3. Each of the rotary elements RE1-RE3 of the differential mechanism 432 is connected to an actuator. Expressing using the collinear diagram, the first rotary element RE1 is the carrier C. The first rotary element RE1 is connected to the engine 20 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 410r has substantially the same construction as the rear drive portion 10r in the above-described first embodiment, so that its description is not provided.

As in the vehicle drive apparatus 10 of the above-described first embodiment, in the vehicle drive apparatus 410, the drive mode can be switched among the plurality of modes, with the engine 20 and the first through third electric motors MG1, MG2, MG3 being controlled by the processor of the electronic control apparatus 70. Further, in the vehicle drive apparatus 410, the processor of the electronic control apparatus 70 controls the brake BG such that the brake BG is placed in the engaged state, as needed, upon switching of the drive mode.

In the differential mechanism 432, the rotational speed of the third rotary element RE3 as the output element is set to a deceleration side, i.e., underdrive (U/D) side, relative to the engine rotational speed Ne at the mechanical point. That is, the mechanical point of the differential mechanism 432 is set by a reduction ratio. Therefore, in the vehicle drive apparatus 410, the Mode3 is the U/Dinput split mode, and the Mode4 is the U/Doutput split mode.

As described above, in the present third embodiment, the same effects as those of the above-described first embodiment can be obtained.

### FOURTH EMBODIMENT

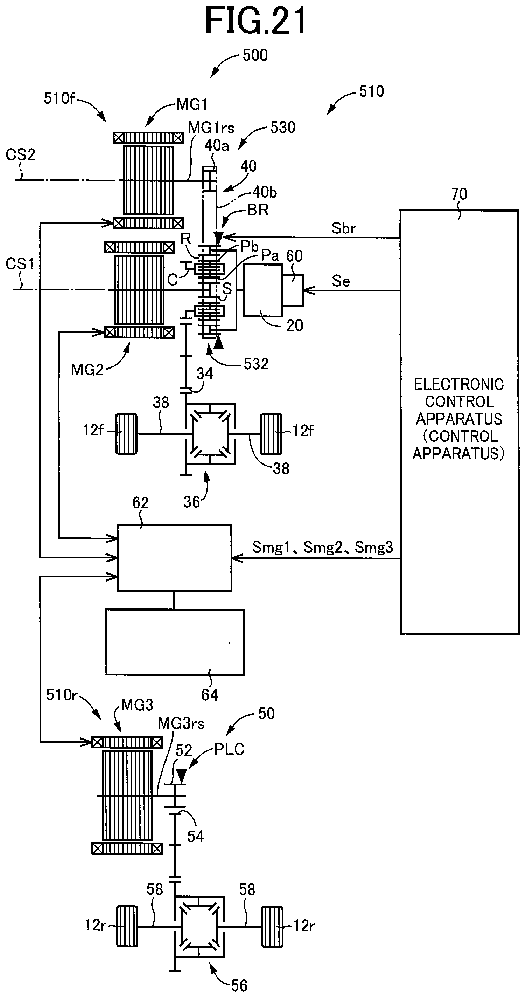

FIG 21 is a view schematically showing a construction of a vehicle 500 provided with a vehicle drive apparatus 510 (including a front drive portion 510f and a rear drive portion 510r) to which the present invention is applied. As shown in FIG 21, a front power transmission device 530 of the front drive portion 510f includes a differential mechanism 532. The differential mechanism 532 and the front differential gear device 36 are connected to each other through the front counter gear 34, as in the front power transmission device 30 in the above-described first embodiment.

The differential mechanism 532 is a double-pinion type planetary gear device having a sun gear S, pinion gears Pa, Pb, a carrier C and a ring gear R. The pinion gears Pa, Pb constitute a plurality of pairs of pinion gears, wherein each of the plurality of pairs of pinion gears consists of the pinion gears Pa, Pb meshing with each other. The second electric motor MG2 is connected to the sun gear S. The engine 20 and the first electric motor MG1 are connected to the ring gear R. The first electric motor MG1 is connected to the ring gear R through the power transmission mechanism 40. The carrier C meshes with the front counter gear 34. The front drive shafts 38 are connected to the carrier C. The brake BR is connected at an end portion thereof to the ring gear R, and is connected at another end portion thereof to a non-rotatable member (not shown) such as a casing.

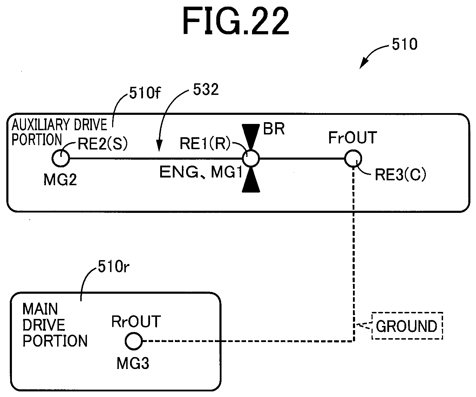

FIG 22 is a view showing a construction of the vehicle drive apparatus 510, by using a collinear diagram. The differential mechanism 532 of the front drive portion 510f includes three rotary elements consisting of the first rotary element RE1, the second rotary element RE2 and the third rotary element RE3. Each of the rotary elements RE1-RE3 of the differential mechanism 532 is connected to an actuator. Expressing using the collinear diagram, the first rotary element RE1 is the ring gear R. The first rotary element RE1 is connected to the engine 20 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 510r has substantially the same construction as the rear drive portion 10r in the above-described first embodiment, so that its description is not provided.

As in the vehicle drive apparatus 10 of the above-described first embodiment, in the vehicle drive apparatus 510, the drive mode can be switched among the plurality of modes, with the engine 20 and the first through third electric motors MG1, MG2, MG3 being controlled by the processor of the electronic control apparatus 70. Further, in the vehicle drive apparatus 510, the processor of the electronic control apparatus 70 controls the brake BG such that the brake BG is placed in the engaged state, as needed, upon switching of the drive mode.

In the differential mechanism 532, the rotational speed of the third rotary element RE3 as the output element is set to an acceleration side, i.e., overdrive (O/D) side, relative to the engine rotational speed Ne at the mechanical point. That is, the mechanical point of the differential mechanism 532 is set by an increase ratio. Therefore, in the vehicle drive apparatus 510, the Mode3 is the O/Dinput split mode, and the Mode4 is the O/Doutput split mode.

As described above, in the present fourth embodiment, the same effects as those of the above-described first embodiment can be obtained.

While the preferred embodiments of this invention have been described in detail by reference to the drawings, it is to be understood that the invention may be otherwise embodied.

For example, in the differential mechanism 32 in the above-described first embodiment, the first rotary element RE1 may be any one of the ring gear R and the sun gear S, while the second rotary element RE2 may be is the other of the ring gear R and the sun gear S. Where the first rotary element RE1 is the sun gear S while the second rotary element RE2 is the ring gear R, the engine 20 and the first electric motor MG1 are connected to the sun gear S while the second electric motor MG2 is connected to the ring gear R.

In the differential mechanism 332 in the above-described second embodiment, the second rotary element RE2 may be any one of the sun gear S and the ring gear R, while the third rotary element RE3 may be the other of the sun gear S and the ring gear R. Where the second rotary element RE2 is the ring gear R while the third rotary element RE3 is the sun gear S, the second electric motor MG2 is connected to the ring gear R while the front drive shafts 38 are connected to the sun gear S.

In the differential mechanism 432 in the above-described third embodiment, the first rotary element RE1 may be any one of the carrier C and the sun gear S, while the second rotary element RE2 may be is the other of the carrier C and the sun gear S. Where the first rotary element RE1 is the sun gear S while the second rotary element RE2 is the carrier C, the engine 20 and the first electric motor MG1 are connected to the sun gear S while the second electric motor MG2 is connected to the carrier C.

In the differential mechanism 532 in the above-described fourth embodiment, the second rotary element RE2 may be any one of the sun gear S and the carrier C, while the third rotary element RE3 may be the other of the sun gear S and the carrier C. Where the second rotary element RE2 is the carrier C while the third rotary element RE3 is the sun gear S, the second electric motor MG2 is connected to the carrier C while the front drive shafts 38 are connected to the sun gear S.

As shown in the above-described first through fourth embodiments, the second rotary element RE2 is a rotary element located in one of opposite ends in the collinear diagram in which the three rotary elements of the differential mechanism are arranged in a straight line.

In the first through fourth embodiments, the power transmission mechanism 40 may be, for example, a pair of gears or a combination of chain and sprocket. Where the power transmission mechanism 40 is the pair of gears, the intermediate gear 40a and the first rotary element RE1 are connected to each other through a counter gear that meshes with the intermediate gear 40a and the first rotary element RE1.

In the first through fourth embodiments, the first electric motor MG1 may be disposed to be coaxial with the engine 20 and the second electric motor MG2. That is, the first electric motor MG1 may be disposed on the first axis CS1 that is the rotation axis of the differential mechanism 32. Even in this case, a certain effect can be obtained in that the body of the vehicle 8 is less likely to be vibrated and the performance of the vehicle 8 in the all-wheel drive can be ensured when the vehicle 8 is caused to run with the engine 20 being operated.

In the first through fourth embodiments, the brake BR does not necessarily have to be provided. In a case without provision of the brake BR, among kinds of the Mode1, the Mode1_MG2_BRon is not executed. As described above, in the Mode1_MG3, the BEV driving can be performed even if the brake BR is not engaged, so that the Mode1_MG3 can be executed even if the brake BR is not provided.

In the above-described first through fourth embodiments, the brake BR may be replaced with a one-way clutch. That is, the brake mechanism, which is configured to stop the rotation of the first rotary element RE1 by being placed in the engaged state, may be constituted by the one-way clutch instead of the brake BR. The one-way clutch includes two rotary elements consisting of inner and outer rings, such that one of the two rotary elements is connected to the first rotary element RE1, and such that the other of the two rotary elements is connected to a non-rotatable member (not shown) such as a casing. In the one-way clutch, each one of the two rotary elements is freely rotatable relative to the other of the two rotary elements in a forward direction that is the same as a rotation direction of the engine 20, and is inhibited from being rotated relative to the other of the two rotary elements in a reverse direction that is opposite to the rotation direction of the engine 20. That is, the one-way clutch is automatically engaged when each one of the two rotary elements is forced to be rotated in the reverse direction. Thus, the one-way clutch is an engagement device which is configured to allow the first rotary element RE1 to be rotated in the forward direction that is the same as the rotation direction of the engine 20 in operation, and which configured to inhibit the first rotary element RE1 from being rotated in the reverse direction. The one-way clutch is automatically engaged by interaction between the inner and outer rings. Therefore, the one-way clutch does not require a control command signal such as the brake-control command signal Sbr that is required to selectively engage and release the brake BR. Mode1_MG2_OWC, i.e., the BEV mode, in which the second electric motor MG2 is caused to generate the torque when the one-way clutch is in the engaged state, is one of the Mode1 modes that allows the BEV driving. The Mode1_MG2_OWC is included in the plurality of modes to which the drive mode is to be switched. The Mode1_MG2_OWC is a mode in which the engine 20 is stopped and the second electric motor MG2 is caused to generate the torque when the one-way clutch is in the engaged state, thereby allowing the BEV driving. In the Mode1_MG2_OWC, the rotational speed of the first rotary element RE1 is fixed to zero by engagement of the one-way clutch, so that the BEV driving can be performed with the second electric motor MG2 being operated by the electric power of the battery 64. In this case, the BEV driving can be performed with the maximum torque of the second electric motor MG2. It is noted that, in the Mode1_MG2_OWC, the drive torque can be increased by causing the third electric motor MG3 to generate the torque.

In the first through fourth embodiments, one of the front and rear wheels 12f, 12r, to which the powers of the engine 20 and the second electric motor MG2 are to be transmitted, may be the rear wheel 12r in place of the front wheel 12f, while the other of the front and rear wheels 12f, 12r, to which the power of the third electric motor MG3 is to be transmitted, may be the front wheel 12f in place of the rear wheel 12r. In other words, the first drive shaft may be each of the rear drive shafts 58 while the second drive shaft may be each of the front drive shafts 38. In this case, one of the front-wheel drive and the rear-wheel drive is the front-wheel drive while the other of the front-wheel drive and the rear-wheel drive is the rear-wheel drive.

In the first through fourth embodiments, the drive portion including the third electric motor MG3 is the main drive portion in the PHEV in which it is expected that the BEV driving in the Mode1_MG3 will be used frequently. However, the drive portion including the engine 20 and the second electric motor MG2 may be the main drive portion in the HEV.

In the first through fourth embodiments, it is possible to further provide a clutch mechanism that is configured to cut off the power transmission between the third rotary element RE3 and the front drive shafts 38, by being placed in its released state. The clutch mechanism is controlled to be placed in the released state when the vehicle is caused to run, for example, in the Mode1_MG3, i.e., the BEV mode in which the third electric motor MG3 is caused to generate the torque. Thus, it is possible to prevent power loss caused by dragging of the second electric motor MG2 or other components located on an upstream side of the front drive shafts 38, during the BEV driving in which the vehicle is caused to run by using the third electric motor MG3 as the power source.

In the first through fourth embodiments, it is possible to further provide a clutch mechanism that is configured to cut off the power transmission between the third rotary element RE3 and the rear drive shafts 58, by being placed in its released state. The clutch mechanism is controlled to be placed in the released state when the vehicle is caused to run, for example, in the Mode1_MG2 or Mode1_MG2_Bron, i.e., the BEV mode in which the second electric motor MG2 is caused to generate the torque. Thus, it is possible to prevent power loss caused by dragging of the third electric motor MG3 during the BEV driving in which the vehicle is caused to run by using the second electric motor MG2 as the power source.

In the first embodiment, the step S10 may be omitted in the control routine shown in the flow chart of FIG 14. Even in absence of the step S10, a certain effect can be obtained in that the body of the vehicle 8 is less likely to be vibrated and the performance of the vehicle 8 in the all-wheel drive can be ensured when the vehicle 8 is caused to run with the engine 20 being operated.

In the first embodiment, the vehicle 8 can be caused to run with the front-rear torque distribution that is changed to the required ratio, even when a direction of change is opposite to that in each of FIGS. 15 and 16.

It is to be understood that the embodiments described above are given for illustrative purpose only, and that the present invention may be embodied with various modifications and improvements which may occur to those skilled in the art.

### NOMENCLATURE OF ELEMENTS

8: vehicle
10: vehicle drive apparatus
12f: front wheel
12r: rear wheel
20: engine
32: differential mechanism
S: sun gear (second rotary element)
C: carrier (third rotary element)
R: ring gear (first rotary element)
38: front drive shaft (first drive shaft)
58: rear drive shaft (second drive shaft)
70: electronic control apparatus (control apparatus)
300: vehicle
310: vehicle drive apparatus
332: differential mechanism
S: sun gear (second rotary element)
C: carrier (first rotary element)
R: ring gear (third rotary element)
400: vehicle
410: vehicle drive apparatus
432: differential mechanism
S: sun gear (second rotary element)
C: carrier (first rotary element)
R: ring gear (third rotary element)
500: vehicle
510: vehicle drive apparatus
532: differential mechanism
S: sun gear (second rotary element)
C: carrier (third rotary element)
R: ring gear (first rotary element)
MG1: first electric motor
MG2: second electric motor
MG3: third electric motor

## Claims

1. A drive apparatus (10;310;410;510) for a vehicle (8;300;400;500), the drive apparatus (10;310;410;510) comprising:
an engine (20);
a first electric motor (MG1);
a second electric motor (MG2);
a third electric motor (MG3);
a differential mechanism (32;332;432;532);
a first drive shaft (38) for driving one of front and rear wheels (12f, 12r) of the vehicle (8;300;400;500);
a second drive shaft (58) for driving the other of the front and rear wheels (12f, 12r); and
a control apparatus (70) including a processor,
wherein the differential mechanism (32;332;432;532) includes a first rotary element (RE1), a second rotary element (RE2) and a third rotary element (RE3),
wherein the engine (20) and the first electric motor (MG1) are connected to the first rotary element (RE1), the second electric motor (MG2) is connected to the second rotary element (RE2), and the first drive shaft (38) is connected to the third rotary element (RE3),
wherein the third electric motor (MG3) is connected to the second drive shaft (58),
wherein the processor is configured to establish, as a drive mode of the vehicle (8;300;400;500), at least a first HEV mode and an all-wheel drive mode,
wherein, when establishing the first HEV mode, the processor is configured to cause the vehicle (8;300;400;500) to run in one of front-wheel drive and rear-wheel drive, by causing the first electric motor (MG1) to be operated as an electric generator by operating the engine (20), while causing the third electric motor (MG3) to be operated as a prime mover so as to transmit a torque to the second drive shaft (58), and
wherein, when establishing the all-wheel drive mode, the processor is configured to cause the vehicle (8;300;400;500) to run in all-wheel drive, by causing an electric power to be transferred between the first electric motor (MG1) and the second electric motor (MG2) by operating the engine (20), while causing the third electric motor (MG3) to be operated as the prime mover so as to transmit the torque to the first drive shaft (38) and the second drive shaft (58), and is configured to control the first, second and third electric motors (MG1, MG2, MG3) such that a torque distribution between the first drive shaft (38) and the second drive shaft (58) becomes a required ratio.

2. The drive apparatus (10;310;410;510) according to claim 1,
wherein, when establishing the all-wheel drive mode, the processor is configured to control the first, second and third electric motors (MG1, MG2, MG3) such that an electric power balance in the first, second and third electric motors (MG1, MG2, MG3) falls within a predetermined range.

3. The drive apparatus (10;310;410;510) according to claim 1 or 2,
wherein the processor is configured to establish, as the drive mode of the vehicle (8;300;400;500), a second HEV mode in addition to the first HEV mode and the all-wheel drive mode, and
wherein, when establishing the second HEV mode, the processor is configured to cause the vehicle (8;300;400;500) to run in the all-wheel drive, by causing the second electric motor (MG2) to be operated as the electric generator by operating the engine (20), while causing the third electric motor (MG3) to be operated as the prime mover so as to transmit the torque to the first drive shaft (38) and the second drive shaft (58).

4. The drive apparatus (10;310;410;510) according to claim 1 or 2,
wherein the processor is configured to establish, as the drive mode of the vehicle (8;300;400;500), a third HEV mode in addition to the first HEV mode and the all-wheel drive mode, and
wherein, when establishing the third HEV mode, the processor is configured to cause the vehicle (8;300;400;500) to run in the other of the front-wheel drive and the rear-wheel drive, by causing the first electric motor (MG1) to be operated as the electric generator by operating the engine (20), while causing the second electric motor (MG2) to be operated as the prime mover so as to transmit the torque to the first drive shaft (38).

5. The drive apparatus (10;310;410;510) according to claim 1 or 2,
wherein the processor is configured to establish the first HEV mode, when a running speed of the vehicle (8;300;400;500) is lower than a predetermined speed value and a driving load of the vehicle (8;300;400;500) is lower than a predetermined load value.

6. The drive apparatus (10;310;410;510) according to claim 3,
wherein the processor is configured to establish the second HEV mode, when a driving load of the vehicle (8;300;400;500) is not lower than a predetermined load value.

7. The drive apparatus (10;310;410;510) according to claim 4,
wherein the processor is configured to establish the third HEV mode, when a running speed of the vehicle (8;300;400;500) is not lower than a predetermined speed value.

8. The drive apparatus (10;310;410;510) according to claim 3,
wherein the processor is configured to establish, as the drive mode of the vehicle (8;300;400;500), a third HEV mode in addition to the first HEV mode, the second HEV mode and the all-wheel drive mode, and
wherein, when establishing the third HEV mode, the processor is configured to cause the vehicle (8;300;400;500) to run in the other of the front-wheel drive and the rear-wheel drive, by causing the first electric motor (MG1) to be operated as the electric generator by operating the engine (20), while causing the second electric motor (MG2) to be operated as the prime mover so as to transmit the torque to the first drive shaft (38).

9. The drive apparatus (10;310;410;510) according to claim 8,
wherein the processor is configured, in absence of the required ratio of the torque distribution between the first drive shaft (38) and the second drive shaft (58), to determine the drive mode to be established, based on a running speed of the vehicle (8;300;400;500) and a driving load of the vehicle (8;300;400;500), and
wherein the processor is configured to establish the all-wheel drive mode as the drive mode, in presence of the required ratio of the torque distribution.

10. The drive apparatus (10;310;410;510) according to claim 9,
wherein the processor is configured, in absence of the required ratio of the torque distribution, to establish the first HEV mode as the drive mode when the running speed is lower than a predetermined speed value and the driving load is lower than a predetermined load value, to establish the second HEV mode as the drive mode when the driving load is not lower than the predetermined load value, and to establish the third HEV mode as the drive mode when the running speed is not lower than the predetermined speed value.
